# EUROPEAN PATENT APPLICATION

(11) **EP 4 293 997 A1**
(43) Date of publication of application: **20.12.2023**
(21) Application number: 22778946.8
(22) Date of filing: 29.03.2022
(51) Int. Cl.: H04M 1/725

(54) **DISPLAY METHOD, ELECTRONIC DEVICE, AND SYSTEM**

(30) Priority: 31.03.2021 CN 202110350053; 30.04.2021 CN 202110486136
(71) Applicant: Huawei Technologies Co., Ltd., Shenzhen, Guangdong 518129 (CN)
(72) Inventor: LI, Jie, Shenzhen, Guangdong 518129 (CN); LIU, Min, Shenzhen, Guangdong 518129 (CN); SUN, Xilin, Shenzhen, Guangdong 518129 (CN); CHENG, Yinzhu, Shenzhen, Guangdong 518129 (CN)
(74) Representative: Gill Jennings & Every LLP
(86) International application number: PCT/CN2022/083732
(87) International publication number: WO 2022/206764

(57) **Abstract**

A display method, an electronic device, and a system are provided. The method includes: In response to detecting an operation of a user, a first electronic device displays a first interface, and sends first information to a second electronic device, where the first interface is a display interface of a camera application, and the first information includes one or more interface elements on the first interface and tag information of the one or more interface elements; and the second electronic device displays a second interface based on the tag information of the one or more interface elements, where at least some interface elements in the one or more interface elements are displayed on the second interface. A source end device adds tag information to an interface element on a camera interface, and a client device may restore, by using the tag information of the interface element, a camera interface suitable for the client device, without relying on a video decoding capability of the client device. In addition, the user may further control photographing by using the client device. This helps improve user experience.

## Description

This application claims priority to Chinese Patent Application No. 202110350053.6, filed with the China National Intellectual Property Administration on March 31, 2021 and entitled "DISPLAY METHOD, ELECTRONIC DEVICE, AND SYSTEM", and Chinese Patent Application No. 202110486136.8, filed with the China National Intellectual Property Administration on April 30, 2021 and entitled "DISPLAY METHOD, ELECTRONIC DEVICE, AND SYSTEM", which are incorporated herein by reference in their entireties.

### TECHNICAL FIELD

This application relates to the field of terminals, and more specifically, to a display method, an electronic device, and a system.

### BACKGROUND

Currently, a technology for restoring a user interface (user interface, UI) between devices is mainly a video projection-type restoration technology (for example, Miracast). A basic principle of the technology is to encode a picture of a source end device (source end device) into a video and play the video on a client device (sink end device), so that the client device restores a user interface of the source end. This type of UI restoration technology requires a capability (for example, a video decoding capability) of the client device, and cannot be used on a device without a video decoding capability.

### SUMMARY

Embodiments of this application provide a display method, an electronic device, and a system. A source end device adds tag information to an interface element on a camera interface, and a client device may restore, by using the tag information of the interface element, a camera interface suitable for the client device, without relying on a video decoding capability of the client device. In addition, a user may further control photographing by using the client device. This helps improve user experience.

According to a first aspect, a system is provided. The system includes a first electronic device and a second electronic device, and the first electronic device communicates with the second electronic device through a short-range wireless connection. The first electronic device is configured to: in response to detecting an operation of a user, display a first interface, and send first information to the second electronic device, where the first interface is a display interface of a camera application, and the first information includes one or more interface elements on the first interface and tag information of the one or more interface elements. The second electronic device is configured to: in response to receiving the first information, display a second interface based on the tag information of the one or more interface elements, where at least some interface elements in the one or more interface elements are displayed on the second interface.

In this embodiment of this application, after detecting the operation of the user, the first electronic device (a source end device) may send the one or more interface elements on the first interface and the tag information of the one or more interface elements to the second electronic device (a client device). In this way, the second electronic device can restore, based on the tag information, the display interface that is suitable for the camera application of the second electronic device, so that the user can control photographing by using the second electronic device. This may also enable the user to experience different interface styles on different devices, thereby helping improve user experience. In addition, when sending the interface element and the tag information of the interface element, the first electronic device does not need to rely on a video encoding capability of the first electronic device, and when restoring an interface, the second electronic device does not need to rely on a video decoding capability of the second electronic device.

In some possible implementations, the operation of the user may be an operation of tapping an icon of the camera application by the user.

In some possible implementations, the operation of the user may be an operation of swiping in a preset direction on a lock screen by the user.

In some possible implementations, each of the one or more interface elements in the first information corresponds to tag information of each interface element.

In some possible implementations, the first electronic device is further configured to: before sending the first information to the second electronic device, obtain a plurality interface elements on the first interface, and adds tag information on the plurality interface elements.

In some possible implementations, the tag information may be a name of an interface element.

With reference to the first aspect, in some implementations of the first aspect, the second electronic device is specifically configured to display the second interface based on the tag information of the one or more interface elements and a first mapping relationship, where the first mapping relationship is a mapping relationship between display areas of the at least some interface elements and tag information of the at least some interface elements.

In some possible implementations, the first electronic device stores the first mapping relationship. When receiving an operation of the user, the first electronic device may further send the first mapping relationship to the second electronic device in addition to sending the interface element and the tag information of the interface element to the second electronic device.

In some possible implementations, the first electronic device may store a plurality of mapping relationships in a photographing scenario. For example, when the first electronic device (for example, a mobile phone) sends the first mapping relationship to the second electronic device (for example, a notebook computer), the first electronic device (for example, the mobile phone) may send a second mapping relationship to a third electronic device (for example, a smartwatch).

In some possible implementations, the second electronic device may store the first mapping relationship. When receiving the interface element and the tag information that are sent by the first electronic device, the second electronic device may display the second interface based on the first mapping relationship.

In this embodiment of this application, for different client devices, display interfaces of different camera applications may be restored based on different mapping relationships. For example, for the notebook computer and the smartwatch, display interfaces of different styles may be restored in a same scenario. In this way, the user can experience different interface styles on different types of devices. This helps improve user experience.

With reference to the first aspect, in some implementations of the first aspect, the first electronic device is further configured to send first indication information to the second electronic device in response to detecting the operation of the user, where the first indication information indicates that the first electronic device starts the camera application. The second electronic device is further configured to: in response to receiving the first indication information, prompt the user whether to control photographing by using the second electronic device. The second electronic device is further configured to send request information to the first electronic device in response to detecting an operation that the user determines to control photographing by using the second electronic device, where the request information is used to request information about the interface element on the first interface. The first electronic device is specifically configured to send the first information to the second electronic device in response to receiving the request information.

In this embodiment of this application, when the first electronic device detects the operation of the user, the first electronic device may send the first indication information to the second electronic device while displaying the display interface of the camera application, so that the second electronic device may prompt the user whether to control photographing by using the second electronic device. This helps the user determine a device on which photographing can be controlled.

With reference to the first aspect, in some implementations of the first aspect, the at least some interface elements include a viewfinder frame, and the first electronic device is further configured to: detect that image information in the viewfinder frame is updated, and send updated image information to the second electronic device. The second electronic device is further configured to display the updated image information in the viewfinder frame on the second interface in response to receiving the updated image information.

In this embodiment of this application, when the image information in the viewfinder frame displayed by the first electronic device is updated, the first electronic device may send the updated image information to the second electronic device in real time. In this way, synchronization of the image information in the viewfinder frame displayed by the first electronic device and the image information in the viewfinder frame displayed by the second electronic device can be ensured.

In some possible implementations, the first electronic device may send the image information in the viewfinder frame to the second electronic device based on a specific periodicity.

With reference to the first aspect, in some implementations of the first aspect, the at least some interface elements include a photographing control, and the second electronic device is further configured to send second indication information to the first electronic device in response to detecting an input of the user for the photographing control, where the second indication information indicates that the second electronic device detects the input of the user for the photographing control. The first electronic device is further configured to: in response to receiving the second indication information, perform a photographing operation, and obtain first image information.

In this embodiment of this application, when the second electronic device detects the input (for example, tapping or a voice input) of the user for the photographing control, the second electronic device may indicate that the first electronic device detects the input of the user for the photographing control, so that the first electronic device can perform a photographing operation, and obtain the first image information. In this way, the user may control photographing by using the second electronic device, and the user does not need to return to the first electronic device to control photographing. This helps improve user experience.

With reference to the first aspect, in some implementations of the first aspect, the at least some interface elements further include a gallery entry, and the first electronic device is further configured to: before performing the photographing operation, and obtaining the first image information, display thumbnail information of second image information through the gallery entry. The first electronic device is further configured to: in response to obtaining the first image information, update the thumbnail information of the second image information in the gallery entry to thumbnail information of the first image information, and send second information to the second electronic device, where the second information includes the thumbnail information of the first image information. The second electronic device is further configured to: in response to receiving the second information, update the thumbnail information of the second image information in the gallery entry displayed on the second interface to the thumbnail information of the first image information.

In this embodiment of this application, when the display interfaces of the first electronic device and the second electronic device both include the gallery entry, if the first electronic device obtains new image information through photographing, the first electronic device may send thumbnail information of the new image information to the second electronic device, so that the second electronic device may update the thumbnail information displayed in the gallery entry. This can ensure synchronization of thumbnail information in the gallery entry on the two devices.

With reference to the first aspect, in some implementations of the first aspect, the second electronic device is further configured to display a countdown control on the second interface. The second electronic device is further configured to send third indication information to the first electronic device in response to detecting an input of the user for the countdown control, where the third indication information indicates that the second electronic device detects the input of the user for the countdown control. The first electronic device is further configured to: in response to receiving the third indication information, perform the photographing operation when a countdown ends.

In some possible implementations, the display interface of the camera application displayed by the first electronic device does not include the countdown control.

In this embodiment of this application, the display interface of the camera application displayed on the second electronic device may include an interface element (for example, the countdown control) that is not displayed on the first interface. The second electronic device may provide the user with more abundant functions to facilitate the user to perform an operation. This helps improve experience of the user when the user controls photographing by using the second electronic device.

With reference to the first aspect, in some implementations of the first aspect, the first electronic device is further configured to: before sending the first information to the second electronic device, determine that a distance between the first electronic device and the second electronic device is less than or equal to a preset distance.

With reference to the first aspect, in some implementations of the first aspect, the first electronic device is a mobile phone, and the second electronic device is a smartwatch.

According to a second aspect, a display method is provided, where the method is applied to a first electronic device. The first electronic device communicates with a second electronic device through a short-range wireless connection. The method includes: The first electronic device detects an operation of a user; and the first electronic device displays a first interface and sends first information to the second electronic device in response to the operation, where the first interface is a display interface of a camera application, and the first information includes one or more interface elements on the first interface and tag information of the one or more interface elements.

With reference to the second aspect, in some implementations of the second aspect, the method further includes: The first electronic device sends information about a first mapping relationship to the second electronic device, where the first mapping relationship is a mapping relationship between a display area of an interface element and tag information of the interface element.

With reference to the second aspect, in some implementations of the second aspect, that the first electronic device displays a first interface and sends first information to the second electronic device in response to the operation includes: The first electronic device displays the first interface and sends first indication information to the second electronic device in response to detecting the operation of the user, where the first indication information indicates that the first electronic device starts the camera application; the first electronic device receives request information sent by the second electronic device, where the request information is used to request information about the interface element on the first interface; and the first electronic device sends the first information to the second electronic device in response to receiving the request information.

With reference to the second aspect, in some implementations of the second aspect, the one or more interface elements include a viewfinder frame, a second interface includes the viewfinder frame, and the method further includes: The first electronic device sends updated image information to the second electronic device in response to detecting that image information in the viewfinder frame is updated.

With reference to the second aspect, in some implementations of the second aspect, the one or more interface elements include a photographing control, the second interface includes the photographing control, and the method further includes: The first electronic device receives second indication information sent by the second electronic device, where the second indication information indicates that the second electronic device detects an input of the user for the photographing control; and in response to receiving the second indication information, the first electronic device performs a photographing operation and obtains first image information.

With reference to the second aspect, in some implementations of the second aspect, the one or more interface elements further include a gallery entry, the second interface includes the gallery entry, and the method further includes: Before performing the photographing operation and obtaining the first image information, the first electronic device displays thumbnail information of second image information through the gallery entry; and in response to obtaining the first image information, the first electronic device updates the thumbnail information of the second image information in the gallery entry to thumbnail information of the first image information, and sends second information to the second electronic device, where the second information includes the thumbnail information of the first image information.

With reference to the second aspect, in some implementations of the second aspect, the method further includes: Before sending the first information to the second electronic device, the first electronic device determines that a distance between the first electronic device and the second electronic device is less than or equal to a preset distance.

According to a third aspect, a display method is provided, where the method is applied to a second electronic device, and the second electronic device communicates with a first electronic device through a short-range wireless connection. The method includes: The second electronic device receives first information sent by the first electronic device, where the first information includes one or more interface elements on a first interface and tag information of the one or more interface elements, and the first interface is a display interface of a camera application; and in response to receiving the first information, the second electronic device displays a second interface based on the tag information of the one or more interface elements, where at least some interface elements in the one or more interface elements are displayed on the second interface.

With reference to the third aspect, in some implementations of the third aspect, that the second electronic device displays a second interface based on the tag information of the one or more interface elements includes: The second electronic device displays the second interface based on the tag information of the one or more interface elements and a first mapping relationship, where the first mapping relationship is a mapping relationship between display areas of the at least some interface elements and tag information of the at least some interface elements.

With reference to the third aspect, in some implementations of the third aspect, before the second electronic device receives first information sent by the first electronic device, the method further includes: The second electronic device receives first indication information sent by the first electronic device, where the first indication information indicates that the first electronic device starts the camera application; in response to receiving the first indication information, the second electronic device prompts a user whether to control photographing by using the second electronic device; and the second electronic device sends request information to the first electronic device in response to detecting an operation that the user determines to control photographing by using the second electronic device, where the request information is used to request information about the interface element on the first interface.

With reference to the third aspect, in some implementations of the third aspect, the at least some interface elements include a viewfinder frame, and the method further includes: When image information in the viewfinder frame on the first interface is updated, the second electronic device receives updated image information sent by the first electronic device; and the second electronic device displays the updated image information in the viewfinder frame on the second interface in response to receiving the updated image information.

With reference to the third aspect, in some implementations of the third aspect, the at least some interface elements include a photographing control, and the method further includes: The second electronic device sends second indication information to the first electronic device in response to detecting an input of the user for the photographing control, where the second indication information indicates that the second electronic device detects the input of the user for the photographing control.

With reference to the third aspect, in some implementations of the third aspect, the at least some interface elements further include a gallery entry, and the method further includes: Before sending second indication information to the first electronic device, the second electronic device displays thumbnail information of first image information in the gallery entry displayed on the second interface; after sending the second indication information to the first electronic device, the second electronic device receives second information sent by the first electronic device, where the second information includes thumbnail information of second image information; and in response to receiving the second information, the second electronic device updates the thumbnail information of the first image information in the gallery entry displayed on the second interface to the thumbnail information of the second image information.

With reference to the third aspect, in some implementations of the third aspect, the method further includes: The second electronic device displays a countdown control on the second interface; and the second electronic device sends third indication information to the first electronic device in response to detecting an input of the user for the countdown control, where the third indication information indicates that the second electronic device detects the input of the user for the countdown control.

With reference to the third aspect, in some implementations of the third aspect, the first interface does not include the countdown control.

According to a fourth aspect, an apparatus is provided. The apparatus includes: a detection unit, configured to detect an operation of a user; a display unit, configured to display a first interface by a first electronic device in response to the operation, where the first interface is a display interface of a camera application; and a sending unit, configured to send first information to a second electronic device, where the first information includes one or more interface elements on the first interface and tag information of the one or more interface elements.

According to a fifth aspect, an apparatus is provided. The apparatus includes: a receiving unit, configured to receive first information sent by a first electronic device, where the first information includes one or more interface elements on a first interface and tag information of the one or more interface elements, and the first interface is a display interface of a camera application; and a display unit, configured to: in response to receiving the first information, display a second interface based on the tag information of the one or more interface elements, where the second interface displays at least some interface elements in the one or more interface elements.

According to a sixth aspect, an electronic device is provided, including one or more processors, a memory, and one or more computer programs. The one or more computer programs are stored in the memory. The one or more computer programs include instructions. When the instructions are executed by the electronic device, the electronic device is enabled to perform the method in any possible implementation of the second aspect.

According to a seventh aspect, an electronic device is provided, including one or more processors, a memory, and one or more computer programs. The one or more computer programs are stored in the memory. The one or more computer programs include instructions. When the instructions are executed by the electronic device, the electronic device is enabled to perform the method in any possible implementation of the third aspect.

According to an eighth aspect, a computer program product including instructions is provided. When the computer program product runs on a first electronic device, the electronic device is enabled to perform the method according to the second aspect; or when the computer program product runs on a second electronic device, the electronic device is enabled to perform the method according to the third aspect.

According to a ninth aspect, a computer-readable storage medium is provided, including instructions. When the instructions are run on a first electronic device, the electronic device is enabled to perform the method according to the second aspect; or when the instructions are run on a second electronic device, the electronic device is enabled to perform the method according to the third aspect.

According to a tenth aspect, a chip is provided, and is configured to execute instructions. When the chip runs, the chip performs the method according to the second aspect; or the chip performs the method according to the third aspect.

### BRIEF DESCRIPTION OF DRAWINGS

FIG. 1 is a schematic diagram of a hardware structure of an electronic device according to an embodiment of this application;
FIG. 2 is a block diagram of a software structure according to an embodiment of this application;
FIG. 3(a) to FIG. 3(e) show a group of graphical user interfaces according to an embodiment of this application;
FIG. 4(a) and FIG. 4(b) show another group of graphical user interfaces according to an embodiment of this application;
FIG. 5(a) to FIG. 5(d) show another group of graphical user interfaces according to an embodiment of this application;
FIG. 6(a) and FIG. 6(b) show another group of graphical user interfaces according to an embodiment of this application;
FIG. 7(a) to FIG. 7(c) show another group of graphical user interfaces according to an embodiment of this application;
FIG. 8 is a schematic block diagram of a system architecture according to an embodiment of this application;
FIG. 9 is a schematic diagram of a drawing instruction according to an embodiment of this application;
FIG. 10 is a schematic diagram of distribution of areas of interface elements in a photographing scenario according to an embodiment of this application;
FIG. 11 is a schematic diagram of distribution of areas of interface elements in a music scenario according to an embodiment of this application;
FIG. 12 shows a process of interaction between a mobile phone and a smartwatch in a photographing scenario according to an embodiment of this application;
FIG. 13 shows another process of interaction between a mobile phone and a smartwatch in a photographing scenario according to an embodiment of this application;
FIG. 14 is a schematic flowchart of a display method according to an embodiment of this application;
FIG. 15 is a schematic diagram of a structure of an apparatus according to an embodiment of this application;
FIG. 16 is a schematic diagram of a structure of another apparatus according to an embodiment of this application; and
FIG. 17 is a schematic diagram of a structure of another electronic device according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description of embodiments of this application, "a plurality of" means two or more than two.

The following terms "first" and "second" are merely intended for a purpose of descriptions, and shall not be understood as an indication or implication of relative importance or implicit indication of a quantity of indicated technical features. Therefore, a feature limited by "first" or "second" may explicitly or implicitly include one or more features. In the description of embodiments, "a plurality of' means two or more unless otherwise specified.

A method provided in embodiments of this application may be applied to an electronic device, for example, a mobile phone, a tablet computer, a wearable device, an in-vehicle device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

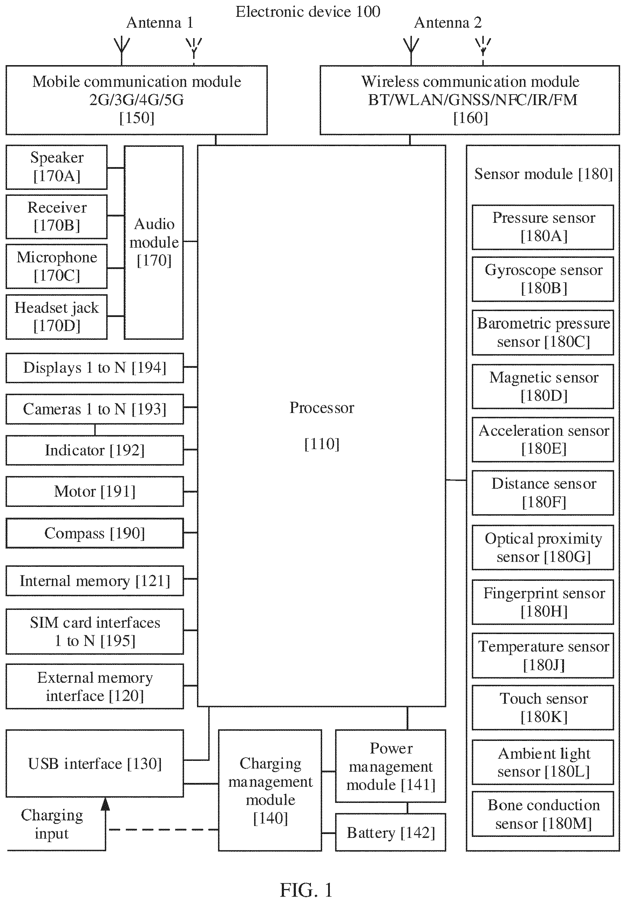

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may further be disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset, to play audio by using the headset. The interface may be further configured to connect to another electronic device such as an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, a quantum dot light emitting diode (quantum dot light emitting diode, OLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 may be configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal. In addition to the digital image signal, the digital signal processor may further process another digital signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "horn", is configured to convert an electrical audio signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch control screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, a game) may also correspond to different vibration feedback effects. A touch vibration feedback effect may be further customized.

The indicator 192 may be an indicator light, and may indicate a charging status and a power change, or may indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195. The plurality of cards may be of a same type or of different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an embedded SIM (embedded-SIM, eSIM) card, that is, an embedded SIM card. The eSIM card may be embedded into the electronic device 100, and cannot be separated from the electronic device 100.

It should be understood that a calling card in embodiments of this application includes but is not limited to a SIM card, an eSIM card, a universal subscriber identity module (universal subscriber identity module, USIM), a universal integrated circuit card (universal integrated circuit card, UICC), and the like.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

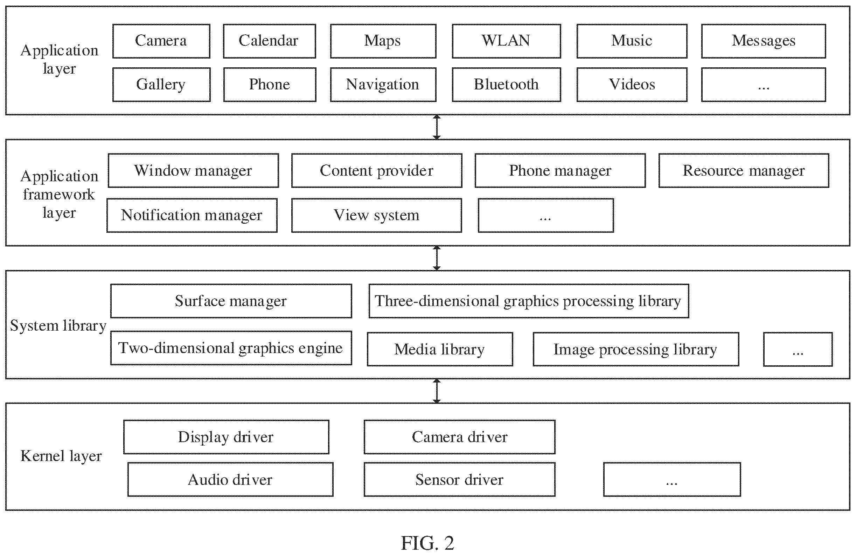

FIG. 2 is a block diagram of the software structure of the electronic device 100 in this embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is used to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are dialed and answered, a browsing history, a bookmark, a phone book, and the like.

The view system includes visual controls such as a control for displaying a text and a control for displaying a picture. The view system may be configured to construct an application. A display interface may include one or more views. For example, a display interface including a notification icon of Messages may include a text display view and an image display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of common audio and video formats, a static image file, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

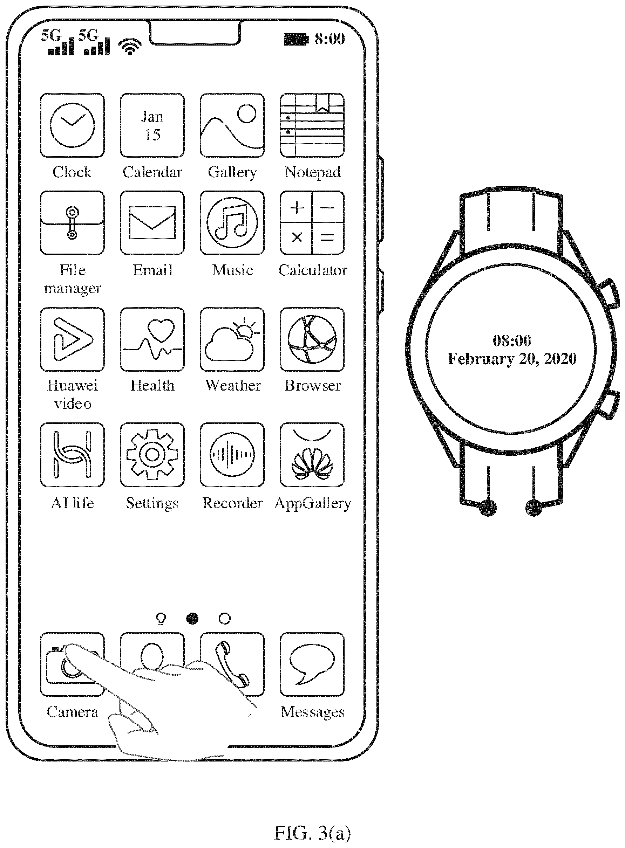

FIG. 3(a) to FIG. 3(e) show a group of graphical user interfaces (graphical user interfaces, GUIs) according to an embodiment of this application.

As shown in FIG. 3(a), a mobile phone displays a home screen of the mobile phone, where the home screen includes icons of a plurality of applications, and the icons of the plurality of applications include an icon corresponding to a camera application. A smartwatch displays a display interface of the smartwatch, and date and time information is displayed on the display interface.

When the smartwatch approaches the mobile phone, the mobile phone and the smartwatch may be networked in a near field wireless connection manner. The networking manner includes but is not limited to access point (access point, AP) networking and peer-to-peer (peer-to-peer, P2P) networking. AP networking means that devices under a same AP (for example, a home Wi-Fi router), may communicate with each other by using an AP device, to form many-to-many networking. For example, the mobile phone and the smartwatch may be located under a same home router. When the smartwatch approaches the mobile phone, the mobile phone may calculate a distance between the mobile phone and the smartwatch based on strength of a received signal by using a received signal strength indication (received signal strength indication, RSSI) technology. When the distance is less than or equal to a preset distance, the mobile phone and the smartwatch may perform AP networking.

Wi-Fi direct (Wi-Fi direct): Wi-Fi direct is also referred to as Wi-Fi peer-to-peer (Wi-Fi peer-to-peer, Wi-Fi P2P), and is a point-to-point connection manner. Wi-Fi direct enables a plurality of Wi-Fi devices to form a peer-to-peer network (peer-to-peer network, P2P network) without an access point (access point, AP), to communicate with each other. One station (station, STA) may act as a conventional AP, and is referred to as a group owner (group owner, GO). Another STA may be referred to as a group client (group client, GC), and the GC may be connected to the GO like connecting to an AP. One STA may play a role of the GO (that is, act as an AP), and another STA may play a role of the GC. In this embodiment of this application, when a device approaches another device, the device on a left side may be considered as a GO, and the device on a right side may be considered as a GC by default. For example, the mobile phone may be used as a GO, and the smartwatch may be used as a GC. Alternatively, when a device detects a right swiping operation of a user, the device may be used as a GC, and the device may select another device on a left side of the device as a GO; or when a device detects a left swiping operation of a user, the device may be used as a GC, and the device may select another device on a right side of the device as a GO.

To construct a P2P network, an electronic device needs to scan another electronic device by using a P2P protocol. This process is referred to as a discovery phase. After the discovery, establishment of a P2P connection can be triggered. When the smartwatch approaches the mobile phone, the mobile phone may use an RSSI technology to calculate a distance between the mobile phone and the smartwatch based on an RSSI. When the distance is less than or equal to a preset distance, the mobile phone and the smartwatch may perform P2P networking.

A Wi-Fi P2P technology is the basis of an upper-layer service. Currently, P2P applications established on P2P include Miracast and WLAN direct. In a Miracast application scenario, an electronic device that supports P2P may discover, through scanning, a large-screen device that supports P2P, connect to the large-screen device that supports P2P, and then directly send resources such as a video and a picture of the electronic device to the large-screen device for display. The P2P technology greatly enriches experience of a Wi-Fi technology.

When the mobile phone detects that the user taps the icon of the camera application, the mobile phone and the smartwatch may display GUIs shown in FIG. 3(b)-1 and FIG. 3(b)-2.

As shown in the GUIs shown in FIG. 3(b)-1 and FIG. 3(b)-2, the mobile phone may display a display interface of a camera in response to detecting an operation of tapping the icon of the camera application by the user, where the display interface includes a plurality of interface elements, for example, a HiTouch control 301, a flash automatic turn-on control 302, an AI photography control 303, a filter selection control 304, a setting control 305, a viewfinder frame 306, a focal length selection control 307, an aperture mode 308, a night mode 309, a portrait mode 310, a photographing mode 311, a video recording mode 312, a professional mode 313, a more option 314, a gallery entry 315, a photographing control 316, and a front-facing camera and a rear-facing camera switching control 317.

In an embodiment, the mobile phone may send indication information to the smartwatch in response to starting the camera application, where the indication information indicates that the mobile phone currently starts the camera application. The smartwatch may display a prompt box 318 in response to receiving the indication information, where the prompt box 318 includes prompt information "It is detected that the mobile phone starts the camera application, do you want to control photographing by using the watch?" After the smartwatch detects that the user taps a control element 319, the smartwatch may send a response to the mobile phone. The response indicates to control photographing by using the smartwatch. The mobile phone may send information about a plurality of interface elements to the smartwatch in response to receiving the response. The plurality of interface elements include the gallery entry 315, the photographing control 316, and image information displayed by the mobile phone through the viewfinder frame 306.

In an embodiment, when the mobile phone and the smartwatch are networked and the distance between the mobile phone and the smartwatch is less than or equal to the preset distance, the mobile phone may send the indication information to the smartwatch.

In an embodiment, the mobile phone, a notebook computer, and the smartwatch are networked. When the mobile phone detects that the user taps the icon of the camera application, the mobile phone may compare a distance between the mobile phone and the notebook computer and the distance between the mobile phone and the smartwatch. When the distance between the mobile phone and the smartwatch is less than the distance between the mobile phone and the notebook computer, the mobile phone may send the information of the plurality of interface elements on a currently displayed camera interface to the smartwatch.

In an embodiment, when the mobile phone detects that the user starts the camera application, if the mobile phone and the smartwatch have been networked, the mobile phone may prompt the user whether to send a display interface of the camera application to the smartwatch. When the mobile phone detects an operation that the user determines to send the display interface of the camera application to the smartwatch, the mobile phone may send the information of the plurality of interface elements on the currently displayed camera interface to the smartwatch.

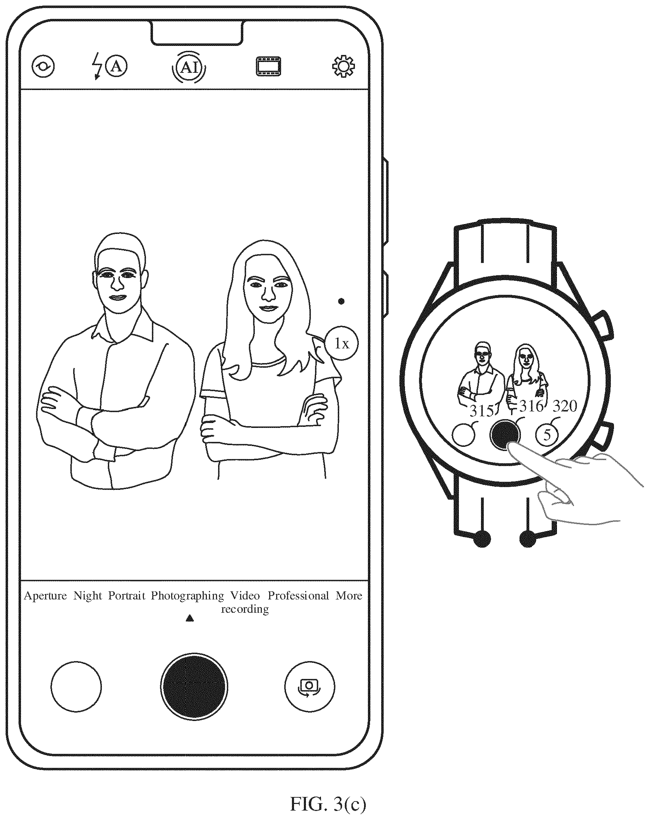

As shown in FIG. 3(c), the smartwatch may display a photographing interface in response to receiving the information of the plurality of interface elements. The photographing interface includes image information displayed through the viewfinder frame 306, the gallery entry 315, the photographing control 316, and a countdown (for example, a countdown of 5s) photographing control 320. When the smartwatch detects an operation of tapping the photographing control 316 by the user, the smartwatch may send indication information to the mobile phone, where the indication information indicates that the smartwatch detects that the user taps the photographing control 316. The mobile phone may perform a photographing operation in response to receiving the indication information.

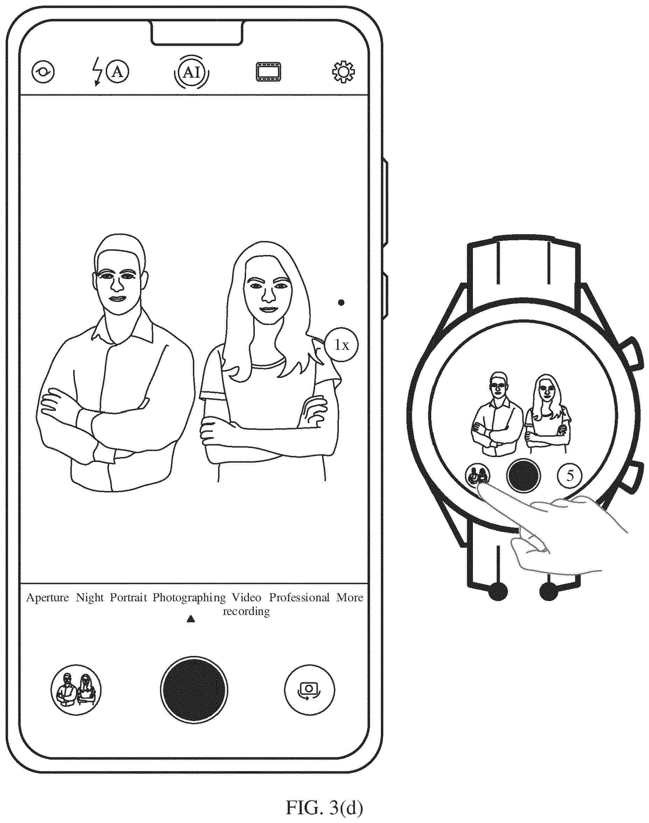

As shown in FIG. 3(d), when the mobile phone completes the photographing operation, a thumbnail of a photo obtained through photographing may be displayed in the gallery entry 315. The mobile phone may send information about an updated gallery entry 315 to the smartwatch. The smartwatch may update the photographing interface in response to receiving information that is about the updated gallery entry 315 and that is sent by the mobile phone. As shown in FIG. 3(d), a thumbnail of a photo that is just taken may be displayed in the gallery entry 315 displayed on the photographing interface of the smartwatch. When the smartwatch detects an operation of tapping the gallery entry 315 by the user, the smartwatch may send indication information to the mobile phone, where the indication information indicates that the smartwatch detects that the user taps the gallery entry 315.

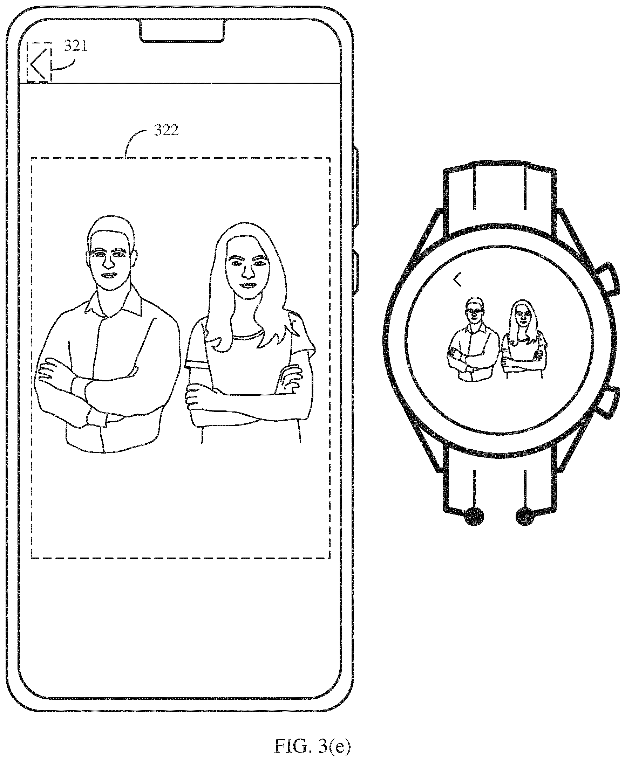

As shown in FIG. 3(e), in response to receiving the indication information sent by the smartwatch, the mobile phone may display a display interface of the photo that is just taken. The display interface includes a plurality of interface elements, for example, a return control 321 and a photo 322. In addition, the mobile phone may send, to the smartwatch, information about the plurality of interface elements (the return control 321 and the photo 322) displayed on the display interface. The smartwatch may display a display interface of the photo in response to receiving the information of the plurality of interface elements, and the return control and the photo 322 are displayed on the display interface.

In this embodiment of this application, the mobile phone may extend the plurality of interface elements on the display interface of the currently running camera application to the smartwatch, so that the user can view, on the smartwatch, the display interface of the camera application on the mobile phone end, and the user can control photographing on the smartwatch. This helps improve user experience. In addition, a display interface of the camera application displayed on the smartwatch is different from the display interface of the camera application on the mobile phone, and the display interface on the smartwatch is more suitable for a playing style of the smartwatch, so that the user can experience, on different devices, a display manner suitable for a current device. The user may control photographing by using the smartwatch. In this way, the user can complete photographing by using the camera on the mobile phone without performing an operation on the mobile phone. This helps improve photographing experience of the user.

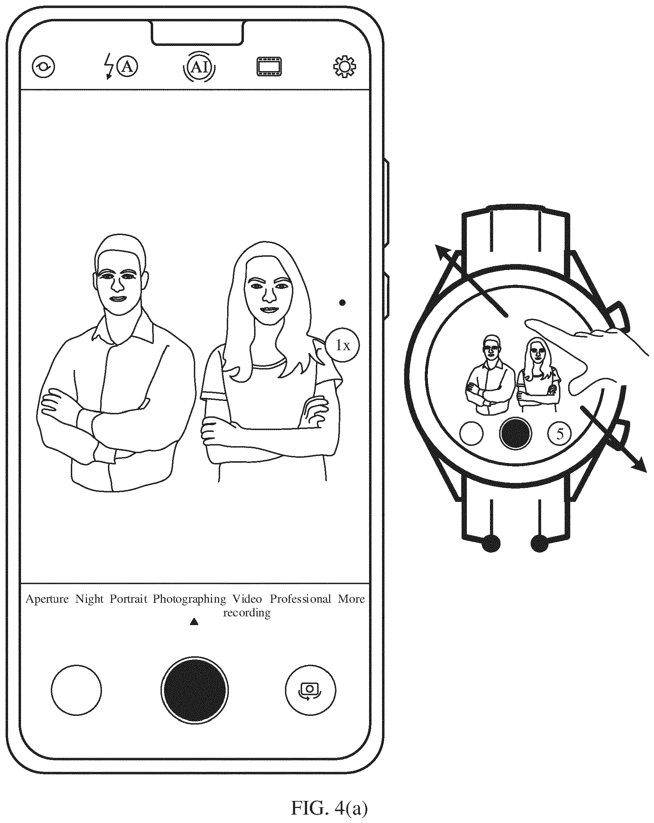

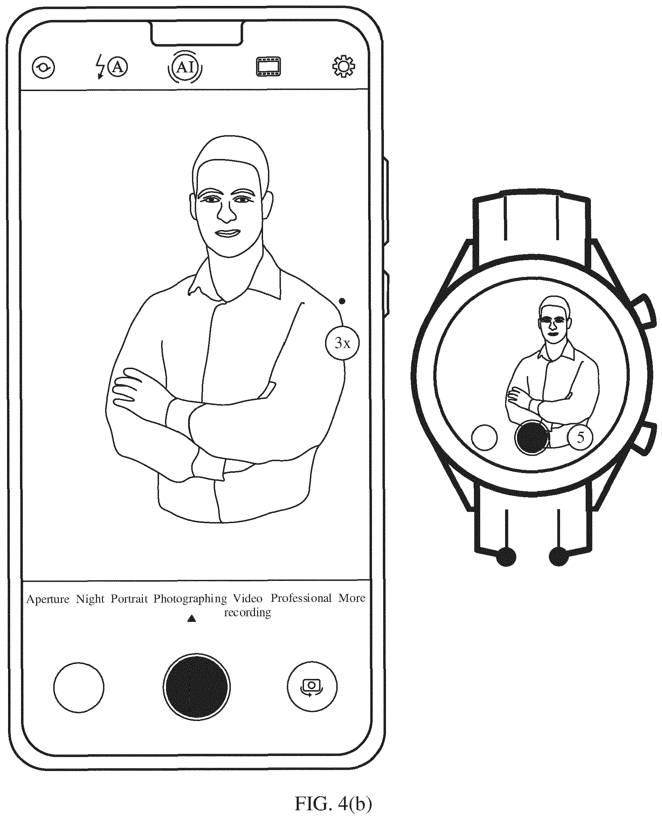

FIG. 4(a) and FIG. 4(b) show another group of GUIs according to an embodiment of this application.

As shown in FIG. 4(a), when a smartwatch detects an operation that two fingers of a user swipe on a screen in opposite directions, the smartwatch may send indication information to a mobile phone, where the indication information indicates that the smartwatch detects that the two fingers of the user swipe on the screen in the opposite directions. For example, the indication information may include a touch event and a touch parameter, the touch event may be a swipe event, and the touch parameter may be a swipe distance of the two fingers in the opposite directions.

It should be understood that FIG. 4(a) may correspond to FIG. 3(c). A difference lies in that in FIG. 3(c), the smartwatch detects the operation of tapping the photographing control by the user, and in FIG. 4(a), the smartwatch detects the operation that the two fingers of the user swipe on the screen in the opposite directions.

As shown in FIG. 4(b), in response to receiving the indication information, the mobile phone may determine that the smartwatch detects the operation that the two fingers of the user swipe on the screen in the opposite directions, so that the mobile phone may determine that the user expects to increase a focal length of a viewfinder frame 306. As shown in FIG. 4(b), the mobile phone may determine to increase the focal length from 1x to 3x. The mobile phone may determine an increase multiple of the focal length based on the swipe distance of the two fingers of the user, so that the mobile phone may perform framing based on the increase multiple, and display, in the viewfinder frame 306, image information obtained after framing is performed based on the increase multiple. In addition, the mobile phone may also send, to the smartwatch, the image information obtained after framing is performed based on the increase multiple, so that the smartwatch may display the image information obtained after framing is performed based on the increase multiple.

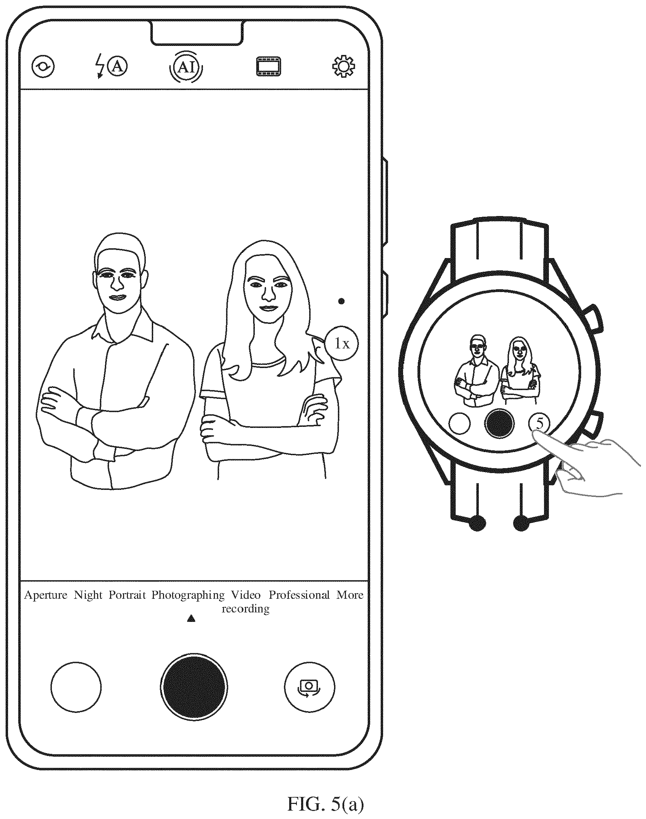

FIG. 5(a) to FIG. 5(d) show another group of GUIs according to an embodiment of this application.

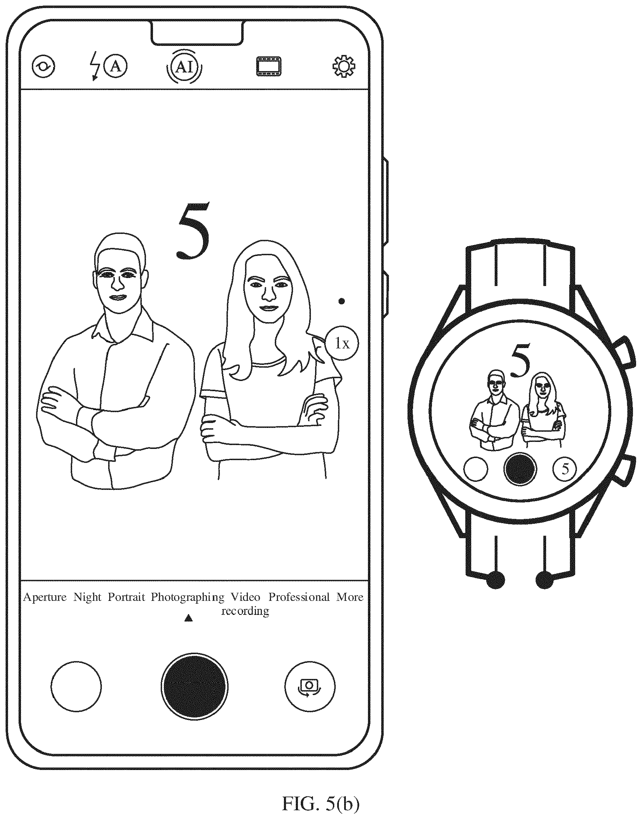

As shown in FIG. 5(a), when a smartwatch detects an operation of tapping a countdown photographing control 320 by a user, the smartwatch may display a GUI shown in FIG. 5(b).

It should be understood that FIG. 5(a) may correspond to FIG. 3(c). A difference lies in that in FIG. 3(c), the smartwatch detects the operation of tapping the photographing control by the user, and in FIG. 5(a), the smartwatch detects the operation of tapping the countdown photographing control by the user.

As shown in FIG. 5(b), in response to detecting the operation of tapping the control 320 by the user, the smartwatch may display countdown information, and the smartwatch may send indication information to a mobile phone, where the indication information indicates the mobile phone to perform a photographing operation five seconds after receiving the indication information.

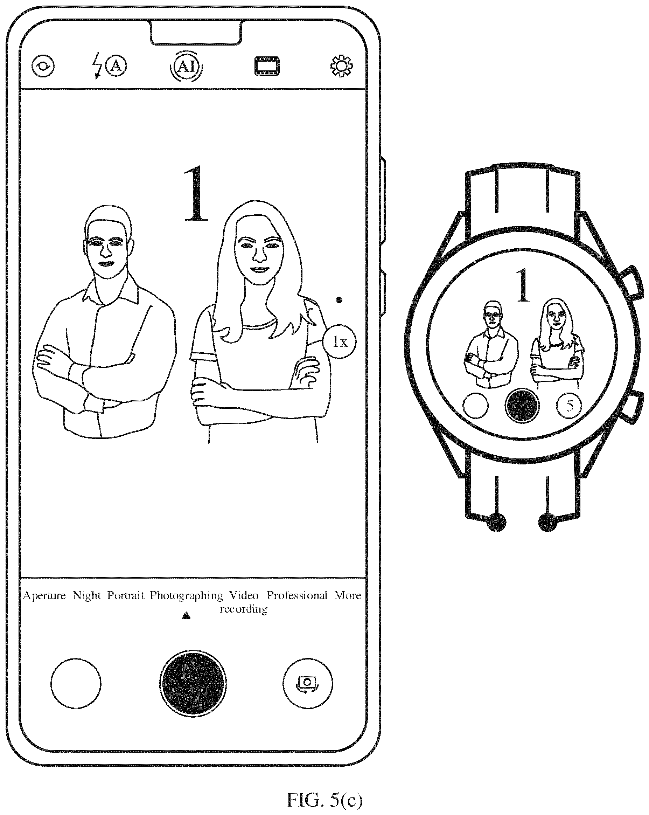

As shown in FIG. 5(c), the smartwatch may display current countdown information (for example, 1s left).

In an embodiment, the mobile phone may also display the countdown information in response to receiving the indication information sent by the smartwatch.

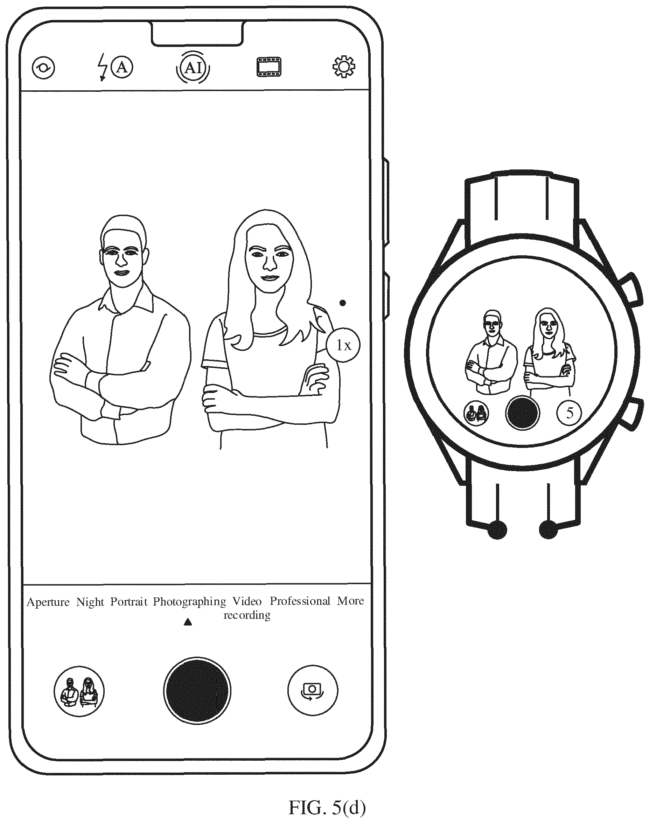

As shown in FIG. 5(d), the mobile phone may perform the photographing operation five seconds after receiving the indication information, to obtain a photo. When the mobile phone completes the photographing operation, a thumbnail of the photo obtained through photographing may be displayed in a gallery entry 315. In addition, the mobile phone may send information about an updated gallery entry 315 to the smartwatch in response to updating of the gallery entry 315. The smartwatch may update a photographing interface in response to receiving information that is about the updated gallery entry 315 and that is sent by the mobile phon. As shown in FIG. 5(d), a thumbnail of a photo that is just taken may be displayed in the gallery entry 315 displayed on the photographing interface of the smartwatch.

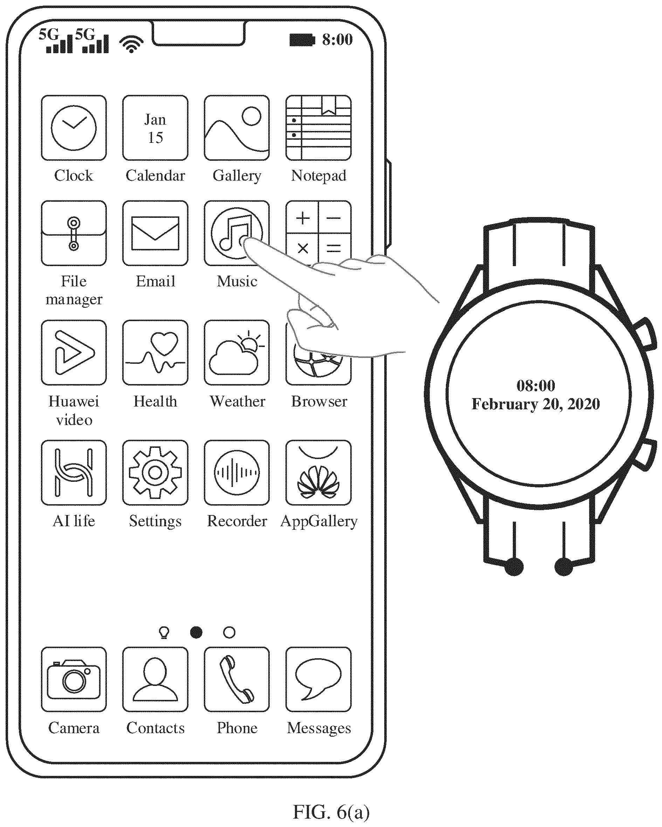

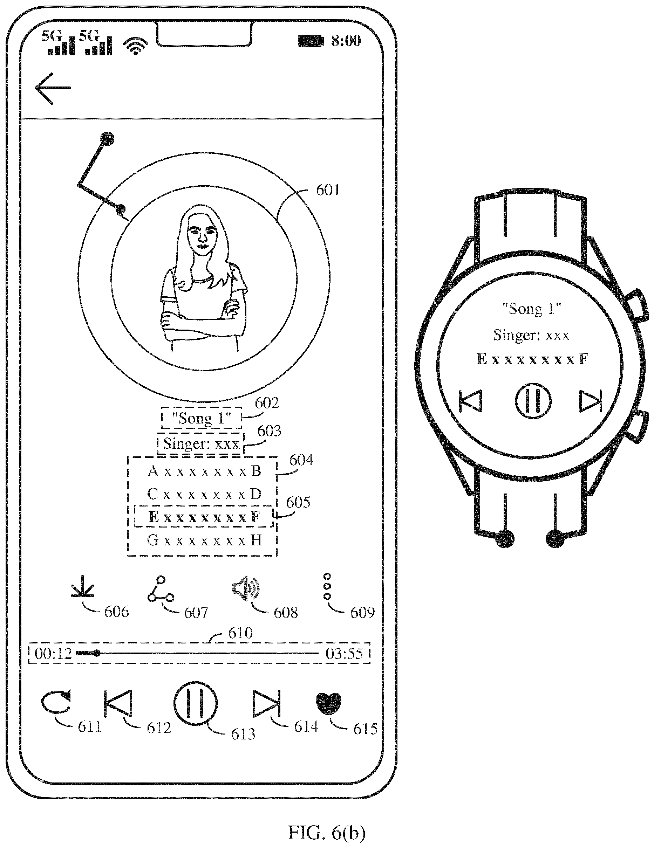

FIG. 6(a) and FIG. 6(b) show another group of GUIs according to an embodiment of this application.

As shown in FIG. 6(a), a mobile phone displays a home screen of the mobile phone, where the home screen includes icons of a plurality of applications, and the icons of the plurality of applications include an icon corresponding to a music application. A smartwatch displays a display interface of the smartwatch, and date and time information is displayed on the display interface. When the mobile phone detects an operation of tapping the icon corresponding to the music application by a user, the mobile phone and the smartwatch may display GUIs shown in FIG. 6(b).

As shown FIG. 6(b), the mobile phone may display a music play interface in response to detecting the operation of tapping the icon corresponding to the music application by the user, where the music play interface includes a plurality of interface elements, for example, a cover picture 601 of a music album, a song name 602 (for example, "Song 1"), a singer name 603, a lyric display area 604, currently played lyrics 605 (for example, lyrics played at 00:12 to 00:15 are " ExxxxxxxF "), a download control 606, a sharing control 607, a volume adjustment control 608, a more-function selection control 609, a song playing progress bar 610, a mode selection control 611 (where the mode selection control may be used to select a sequential play mode, a current song repeat mode, a random play mode, or the like), a previous song play control 612, a pause/start control 613, a next song play control 614, and a like control 615.

In an embodiment, the mobile phone may send indication information to the smartwatch in response to starting the music application, where the indication information indicates that the mobile phone currently starts the music application. The smartwatch may display prompt information (for example, the prompt information may be "It is detected that the music application is started on the mobile phone, do you want to control the music play interface by using the watch?") in response to receiving the indication information. When the smartwatch detects that the user determines to control the music play interface by using the smartwatch, the smartwatch may send a response to the mobile phone, where the response indicates the mobile phone to send one or more interface elements on the music play interface to the smartwatch. In response to receiving the response, the mobile phone may send, to the smartwatch, information about a plurality of interface elements and audio content corresponding to "Song 1". The plurality of interface elements include the song name 602, the singer name 603, the currently played lyrics 605, the previous song play control 612, the pause/start control 613, and the next song play control 614. The smartwatch may display a music play interface in response to receiving the information that is about the plurality of interface elements and that is sent by the mobile phone, where the music play interface includes the song name 602, the singer name 603, the currently played lyrics 605, the previous song play control 612, the pause/start control 613, and the next song play control 614. In addition, the smartwatch may play the audio content corresponding to "Song 1".

In an embodiment, when the mobile phone determines that a distance between the smartwatch and the mobile phone is less than or equal to a preset distance, the mobile phone may send, to the smartwatch, the information of the plurality of interface elements on the currently displayed music play interface and the audio content of the song.

In this embodiment of this application, the mobile phone may extend a plurality of interface elements on a display interface of the currently running music application to the smartwatch, so that the user can view, on the smartwatch, the display interface of the music application on the mobile phone end. This helps improve user experience. In addition, the music play interface displayed on the smartwatch is different from the music play interface on the mobile phone. The music play interface displayed on the smartwatch is more suitable for a play style of the smartwatch. This helps the user experience, on different devices, a display manner suitable for a current device, and also helps prevent the user from holding the mobile phone to switch a song. The user only needs to switch a song by using the smartwatch worn by the user.

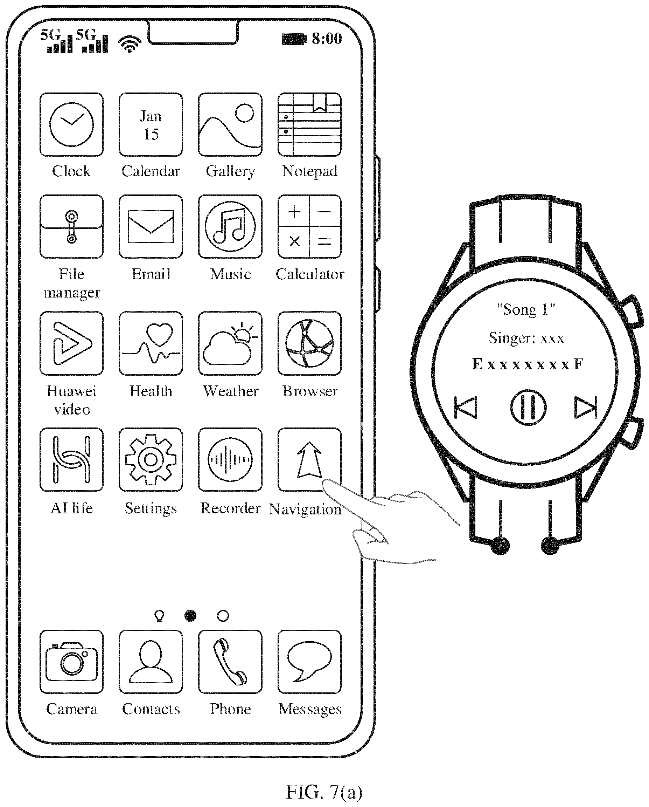

FIG. 7(a) to FIG. 7(c) show another group of GUIs according to an embodiment of this application.

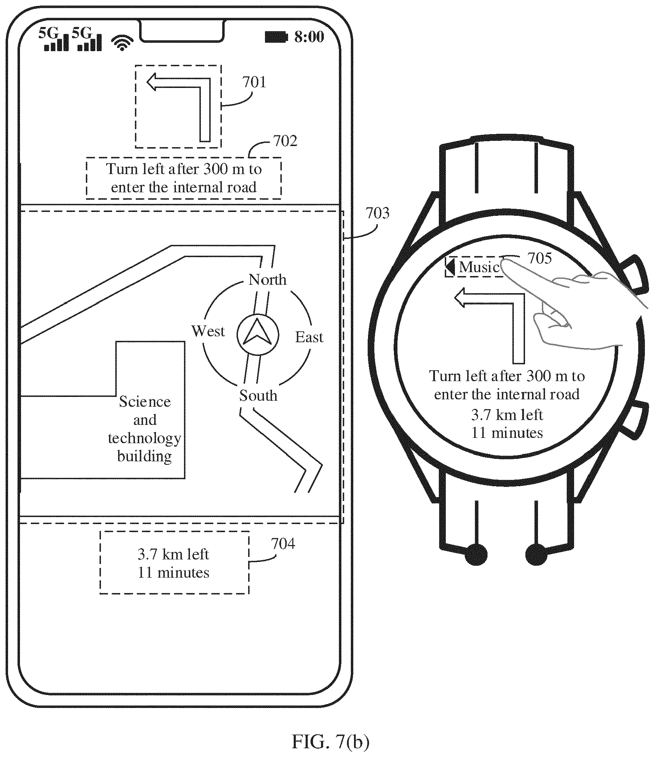

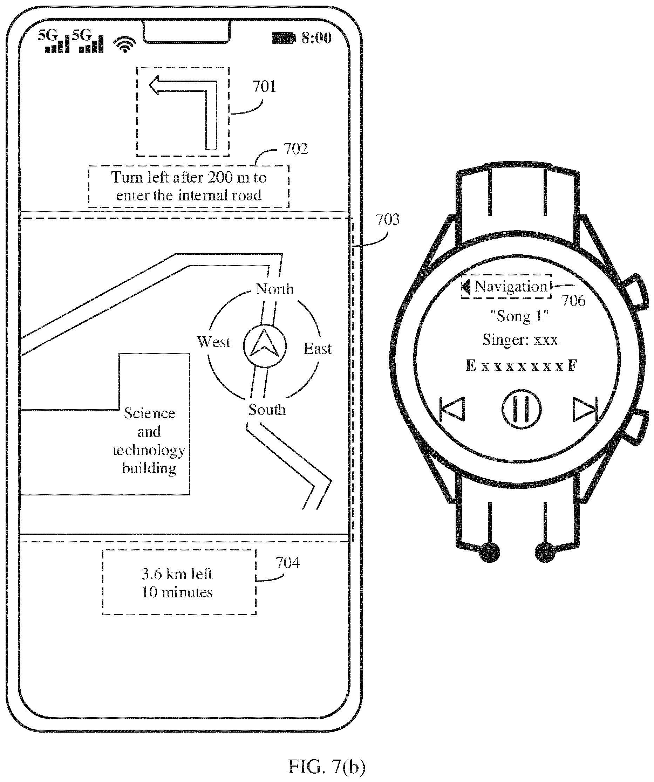

As shown in FIG. 7(a), a mobile phone displays a home screen of the mobile phone, where the home screen includes icons of a plurality of applications, and the plurality of applications include a navigation application. A smartwatch displays a music play interface (for example, a play interface of "Song 1"). When the mobile phone detects an operation of tapping the icon corresponding to the navigation application by a user, the mobile phone and the smartwatch may display GUIs shown in FIG. 7(b).

In an embodiment, the music play interface may be an interface displayed after the smartwatch receives one or more interface elements displayed on a music play interface sent by the mobile phone; or the music play interface may be a play interface of a music application in the smartwatch.

As shown in FIG. 7(b), the mobile phone may display a navigation interface in response to detecting the operation of tapping the icon corresponding to the navigation application by the user, where the navigation interface includes a plurality of interface elements, for example, a turning icon 701, turning content information 702, a current map display window 703, and left distance and time information 704.

In an embodiment, the mobile phone may send indication information to the smartwatch in response to starting the navigation application, where the indication information indicates that the mobile phone currently starts the navigation application. The smartwatch may display prompt information (for example, the prompt information may be "It is detected that the navigation application is started on the mobile phone, do you want to switch from the music play interface to the navigation interface?") in response to receiving the indication information. When the smartwatch detects that the user determines to control the navigation interface by using the smartwatch, the smartwatch may send a response to the mobile phone, where the response indicates the mobile phone to send information about one or more interface elements on the navigation interface to the smartwatch information. The mobile phone may send information about a plurality of interface elements on the navigation interface to the smartwatch in response to receiving the response, where the plurality of interface elements include the turning icon 701, the turning content information 702, and the left distance and time information 704. The smartwatch may display a navigation interface in response to receiving the information that is about the plurality of interface elements and that is sent by the mobile phone, where the music play interface includes the turning icon 701, the turning content information 702, and the left distance and time information 704.

In an embodiment, when the mobile phone determines that a distance between the smartwatch and the mobile phone is less than or equal to a preset distance, the mobile phone may send, to the smartwatch, the information of the plurality of interface elements on the currently displayed navigation interface.

In an embodiment, as shown in FIG. 7(b), the navigation interface displayed by the smartwatch further includes an icon 705 for switching to the music application. The smartwatch may display a GUI shown in FIG. 7(c) in response to an operation of tapping the icon 705 by the user.

As shown in FIG. 7(c), the smartwatch may switch from the navigation interface to the music play interface in response to detecting the operation of tapping the icon 705 by the user.

In an embodiment, if the music play interface is an interface displayed after the smartwatch receives one or more interface elements displayed on the music play interface sent by the mobile phone, the smartwatch may further send indication information to the mobile phone in response to detecting the operation of tapping the icon 705 by the user, where the indication information indicates the mobile phone to switch from the display interface of the navigation application to the display interface of the music application. The mobile phone may switch from the display interface of the navigation application to the display interface of the music application in response to receiving the indication information.

In this embodiment of this application, the mobile phone may extend a plurality of interface elements on a display interface of the currently running navigation application to the smartwatch, so that the user can view, on the smartwatch, the display interface of the navigation application on the mobile phone end. This helps improve user experience. In addition, the navigation interface displayed on the smartwatch is different from the navigation interface on the mobile phone. The navigation interface displayed on the smartwatch is more suitable for a play style of the smartwatch. This helps the user experience, on different devices, a display manner suitable for a current device, and also helps prevent the user from performing navigation by holding the mobile phone. The user only needs to view the navigation interface by using the smartwatch worn by the user.

The foregoing describes several groups of GUIs in embodiments of this application with reference to FIG. 3(a) to FIG. 7(c). The following describes an implementation process of the technical solutions in embodiments of this application with reference to the accompanying drawings.

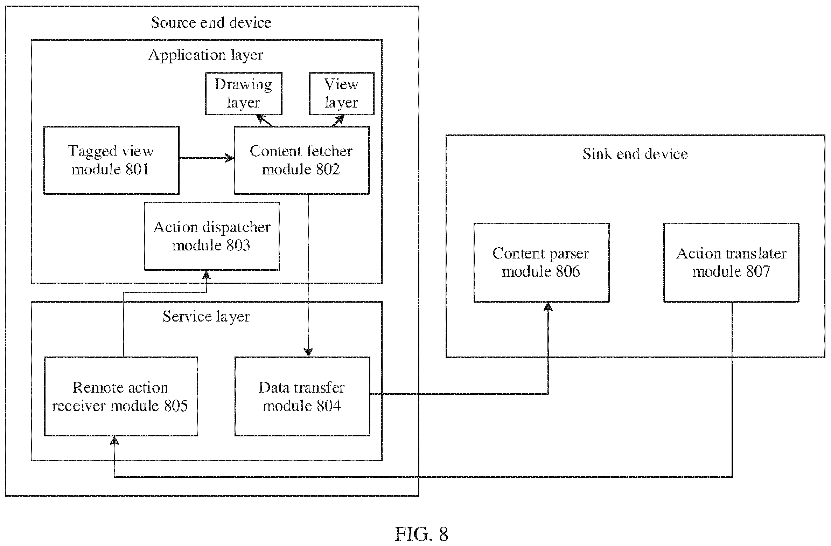

FIG. 8 is a schematic block diagram of a system architecture according to an embodiment of this application. The system architecture includes a source end device (a source end device) and a client device (a sink end device). The source end device includes an application layer and a service layer. The application layer includes a tagged view (tagged view) module 801, a content fetcher (content fetcher) module 802, and an action dispatcher (action dispatcher) module 803. The service layer includes a data transfer (data transfer) module 804 and a remote action receiver (remote action receiver) module 805.

It should be understood that functions implemented by the tagged view module 801, the content fetcher module 802, and the action dispatcher module 803 may be implemented by the view system at the application framework layer in FIG. 2.

The sink end device includes a content parser (view content parser) module 806 and an action translator (action translater) module 807. The following describes each module in the source end device and the sink end device in detail.

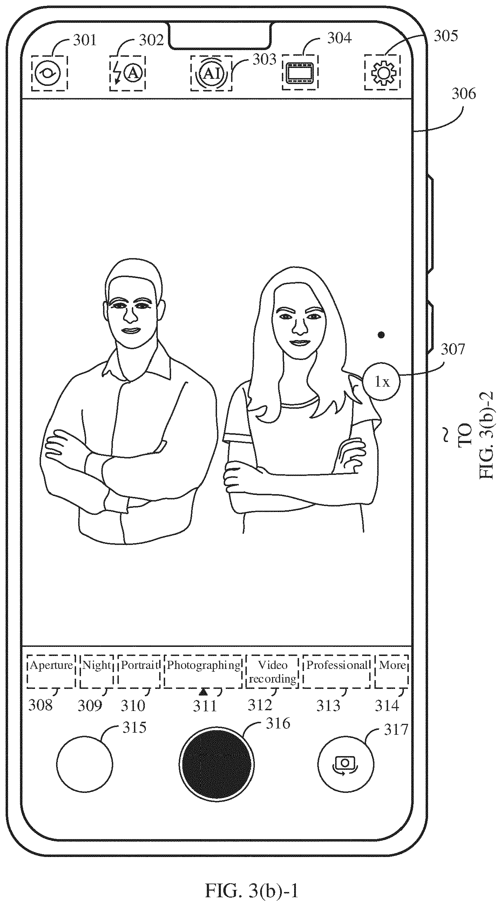

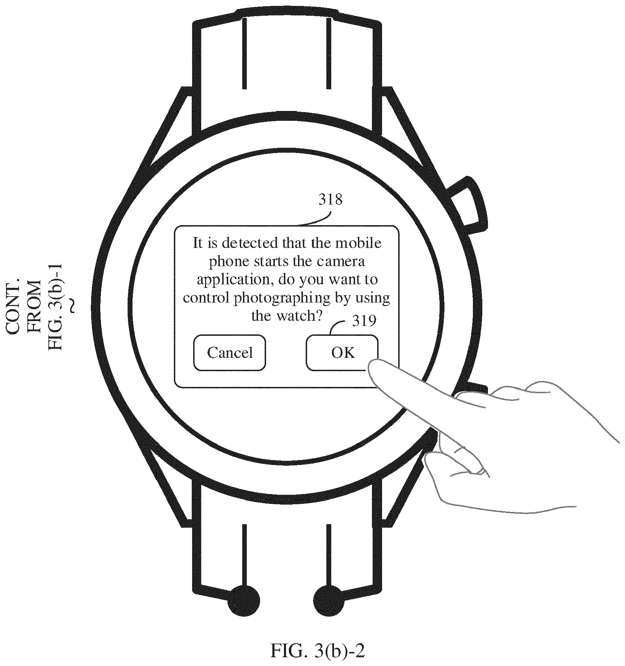

The tagged view module 801 is configured to tag a scenario and an interface element. The camera interface displayed by the mobile phone in FIG. 3(b)-1 is used as an example. The mobile phone may tag an entire scenario as a photographing scenario. The plurality of interface elements on the interface are tagged separately. The source end device may add corresponding tags to the plurality of interface elements, where tag information may include information such as attributes and names of the interface elements. For example, Table 1 shows a correspondence between an interface element and a tag corresponding to the interface element.

**Table 1**

| Interface element | Tag | | |
|---|---|---|---|
| | Attribute Name | | ID |
| Interface element 301 | Image view (Image view) | Smart object recognition entry | 1 |
| Interface element 302 | Image view | Flash on/off control | 2 |
| Interface element 303 | Image view | AI photography on/off control | 3 |
| Interface element 304 | Image view | Filter selection control | 4 |
| Interface element 305 | Image view | Settings control | 5 |
| Interface element 306 | Image view | Preview window | 6 |
| Interface element 307 | Image view | Focal length selection control | 7 |
| Interface element 308 | Text view (Text view) | Aperture mode | 8 |
| Interface element 309 | Text view | Night mode | 9 |
| Interface element 310 | Text view | Portrait mode | 10 |
| Interface element 311 | Text view | Photographing mode | 11 |
| Interface element 312 | Text view | Video mode | 12 |
| Interface element 313 | Text view | Professional mode | 13 |
| Interface element 314 | Text view | More function controls | 14 |
| Interface element 315 | Image view | Gallery entry | 15 |
| Interface element 316 | Image view | Photographing control | 16 |
| Interface element 317 | Image view | Control for switching between a front-facing camera and a rear-facing camera | 17 |
| ... | | ... | ... |

The music play interface displayed by the mobile phone in FIG. 6(b) is used as an example. The mobile phone may tag the entire interface as a music (music) scenario. The plurality of interface elements on the interface are also tagged separately. For example, Table 2 shows a correspondence between an interface element and a corresponding tag.

**Table 2**

| Interface element | Tag | | |
|---|---|---|---|
| | Attribute | Name | ID |
| Interface element 601 | Image view | Cover picture | 18 |
| Interface element 602 | Text view | Song name | 19 |
| Interface element 603 | Text view | Singer (singer) | 20 |
| Interface element 604 | Text view | Lyrics | 21 |
| Interface element 605 | Text view | Current played lyrics | 22 |
| Interface element 606 | Image view | Download | 23 |
| Interface element 607 | Image view | Share | 24 |
| Interface element 608 | Image view | Volume | 25 |
| Interface element 609 | Image view | More functions | 26 |
| Interface element 610 | Image view | Progress bar | 27 |
| Interface element 611 | Image view | Mode selection control | 28 |
| Interface element 612 | Image view | Previous song play control | 29 |
| Interface element 613 | Image view | Pause/Play control | 30 |
| Interface element 614 | Image view | Next song play control | 31 |
| Interface element 615 | Image view | Like control | 32 |
| ... | ... | ... | ... |

The navigation interface displayed by the mobile phone in FIG. 7(b) is used as an example. The mobile phone may tag the entire interface as a navigation scenario. The plurality of interface elements on the interface are also tagged separately. For example, Table 3 shows a correspondence between an interface element and a corresponding tag.

**Table 3**

| Interface element | Tag | | |
|---|---|---|---|
| | Attribute | Name | ID |
| Interface element 701 | Image view | Turning icon | 33 |
| Interface element 702 | Text view | Turning content information | 34 |
| Interface element 703 | Image view | Current map display window | 35 |
| Interface element 704 | Text view | Left distance and time information | 36 |
| ... | ... | ... | ... |

It should be understood that the foregoing Table 1, Table 2, and Table 3 are merely examples. The interface element and the tag information corresponding to the interface element may be alternatively corresponding in another manner. This embodiment of this application is not limited thereto.

The content fetcher module 802 is configured to fetch an interface element and send the fetched interface element to the data transfer module 804 of the service layer. The photographing scenario shown in FIG. 3(b)-1 and FIG. 3(b)-2 is used as an example. The content fetcher module 802 of the source end device may fetch the interface element 306 corresponding to the preview window, the interface element 315 corresponding to the gallery entry, and the interface element 316 corresponding to the photographing control.

The music scenario shown in FIG. 6(b) is used as an example. The content fetcher module 802 of the source end device may fetch the interface element 602 corresponding to the song name, the interface element 603 corresponding to the singer, the interface element 605 corresponding to the currently played lyrics, the interface element 612 corresponding to the previous song play control, the pause/play control 613, and the next song play control 614.

Manners of fetching the interface element by the content fetcher module 802 include but are not limited to the following manners.

### Manner 1:

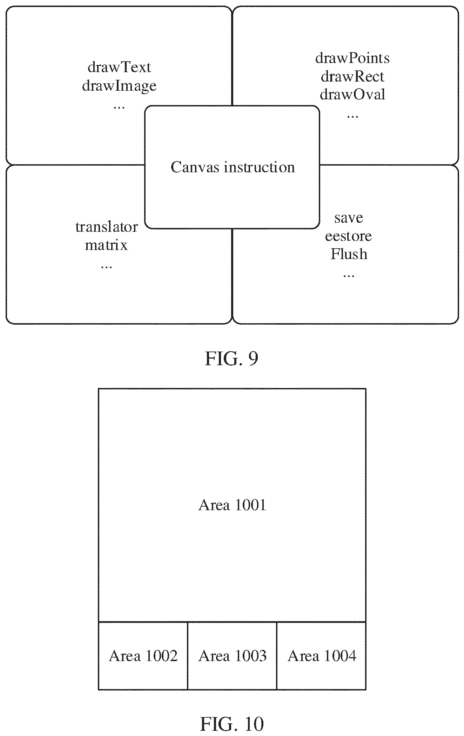

Fetch an interface element from an instruction of a drawing layer. The instruction of the drawing layer includes all information about restoration of each interface element. FIG. 9 is a schematic diagram of drawing instructions. There are more than 40 drawing instructions, and two types of instructions, drawText and drawImage, have specific content. The source end device may fetch content of an interface element from the two types of instructions.

### Manner 2:

Fetch an interface element from a view (view) layer (or a control layer). A control Text View in Android is used as an example. A developer can invoke an interface setText of TextView to set a to-be-displayed text. In this embodiment of this application, the source end device may record a set text, to complete fetching of an interface element whose attribute is TextView. Similarly, the developer may also invoke an interface setImage of ImageView to set to-be-displayed image information. The source end device may record the set image information, to complete fetching of an interface element whose attribute is ImageView.

It should be understood that, as shown in FIG. 8, the application layer may include the drawing layer and the view layer (or the control layer), and the drawing layer and the view layer may implement interface display on the source end. The view layer may provide, for the developer, an interface element for establishing an interface, for example, TextView or Image View. The developer may set a text style, a text size, a text thickness, and the like through an interface (for example, setText) provided by TextView. The content fetcher module 802 may directly fetch an interface element at the view layer. Alternatively, the interface element provided by the view layer may be converted into an instruction, for example, drawText and drawImage, at the drawing layer, and the content fetcher module 802 may also fetch the interface element at the drawing layer by using the instruction, for example, drawText and drawImage.

### Manner 3:

A developer of an application may customize content. For example, the developer may set content in a <key, value> format for a plurality of interface elements on an interface, so that the source end device may fetch an interface element having content in the format.

The data transfer module 804 may send a scenario name (for example, a music scenario or a chat scenario) and information of a tagged interface element (including tag information of the interface element and the interface element fetched by the content fetcher module 802) of a display interface of the source end to the content parser module 806 of the sink end device.

In an embodiment, the source end device may send a BLE data packet to the sink end device, where the BLE data packet may carry the interface element and the tag information of the interface element. The BLE data packet includes a protocol data unit (protocol data unit, PDU). The interface element and the tag information of the interface element may be carried in a service data (service data) field in the PDU, or may be carried in a manufacturer specific data (manufacturer specific data) field in the PDU. For example, a payload (payload) of the service data field may include a plurality of bits. The plurality of bits include an extensible bit. The source end device and the sink end device may agree on content of an extensible bit.

For example, for a graphic interface element (ImageView), the source end device may perform image encoding on the graphic interface element by using an image encoding technology, and use a first bit (the first bit may include one or more bits) to carry data obtained through image encoding. In addition, the source end device may encode tag information of the graphic interface element. For example, the graphic interface element is the interface element 306 in Table 1, and the tag information of the interface element 306 may be the name "Preview window". The source end device may encode the tag information in an encoding manner, for example, GBK, ISO8859-1, or Unicode (for example, UTF-8 or UTF-16), and use a second bit (the second bit may include one or more bits) to carry encoded data. The source end device may associate the first bit with the second bit. After receiving the BLE data packet, the sink end device may decode the data in the first bit by using an image decoding technology, to obtain the interface element 306. In addition, the sink end device may further decode information in the second bit, to obtain the tag information "Preview window" of the interface element 306.

For another example, for a text-type interface element (TextView), the source end device may encode the text-type interface element by using an encoding manner, for example GBK, ISO8859-1, or Unicode (for example, UTF-8 or UTF-16), and use a third bit (the third bit may include one or more bits) to carry data obtained through image encoding. In addition, the source end device may encode tag information of the text-type interface element. For example, the text interface element is the interface element 603 in Table 2, and the tag information of the interface element 603 may be the name "Singer". The source end device may encode the tag information in an encoding manner, for example, GBK, ISO8859-1, or Unicode (for example, UTF-8 or UTF-16), and use a fourth bit (the fourth bit may include one or more bits) to data obtained through encoding. The source end device may associate the third bit with the fourth bit. After receiving the BLE data packet, the sink end device may decode the data in the third bit by using a corresponding decoding technology, to obtain the interface element 603. In addition, the sink end device may further decode information in the fourth bit, to obtain the tag information "Singer" of the interface element 603.

It should be understood that, for interface elements such as a music play progress bar and an on/off control that do not belong to a graphic interface element and do not belong to a text interface element, the source end device may convert these interface elements and the on/off control into character strings, so that the source end device may also encode these interface elements and tag information of the interface elements by using an encoding manner, for example, GBK, ISO8859-1, or Unicode (for example, UTF-8 or UTF-16).

In an embodiment, in addition to sending the interface element and the tag information of the interface element to the sink end device, the source end device may further send scenario information corresponding to the interface element to the sink end device. For example, for the GUIs shown in FIG. 3(a) to FIG. 3(e), the mobile phone may further use, to carry scenario information "photographing", the BLE data packet sent to the smartwatch. For an implementation process in which the source end uses the BLE data packet to carry the scenario information, refer to the process in which the source end device uses the BLE data packet to carry the tag information. Details are not described herein again.

In an embodiment, the source end device may alternatively not send the scenario information corresponding to the interface element to the sink end device. For example, when the sink end device obtains the interface element and the tag information of the interface element sent by the source end device, the sink end device may also determine current scenario information based on the tag information of the interface element. For example, if a tag of an interface element is "Photographing control", the sink end device may determine that a current scenario is a photographing scenario. For another example, if a tag of an interface element is "Singer", the sink end device may determine that a current scenario is a music scenario.

In an embodiment, the tag information may be a name, or may be an ID. For example, for the interface element 306, the source end device and the sink end device may agree that a name corresponding to an interface element whose ID is 6 is "Preview window", and may agree that a name corresponding to an interface element whose ID is 16 is "Photographing control".

In an embodiment, the source end device may send a user datagram protocol (user datagram protocol, UDP) data packet to the sink end device, where the UDP data packet may carry the interface element and the tag information of the interface element. The UPD data packet includes a data part of an IP datagram. The data part of the IP datagram may include an extensible bit. The source end device and the sink end device may agree on the extensible bit. Therefore, the source end device may use the extensible bit to carry the interface element and the tag information of the interface element.

In an embodiment, the source end device may send a transmission control protocol (transmission control protocol, TCP) data packet to the sink end device, where the TCP data packet may carry the interface element and the tag information of the interface element. The TCP data packet includes a TCP header and a TCP data part, and the notification information may be carried in the TCP data part. For example, the TCP data part may include a plurality of bits, where the plurality of bits include an extensible bit. Therefore, the source end device may use the extensible bit to carry the interface element and the tag information of the interface element. Specifically, for an information transmission process of an interface element, for example, a graphic interface element, a text interface element, a progress bar, and a switch control, refer to the descriptions in the foregoing embodiment. Details are not described herein again.

The content parser (view content parser) module 806 of the sink end device is configured to parse a received data packet after receiving the data packet sent by the data transfer module 804 of the source end device, to obtain one or more interface elements and tag information of the interface elements. In an embodiment, the sink end device may further obtain current scenario information.

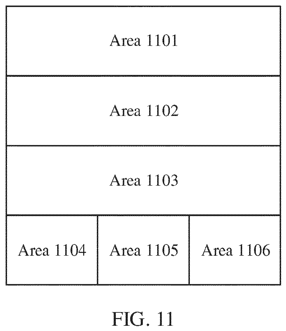

The sink end device stores correspondences between a display area of the interface element and the tag information of an interface element in different scenarios. FIG. 10 and FIG. 11 respectively output schematic diagrams of distribution of areas of interface elements in the photographing scenario and the music scenario.

For example, FIG. 10 is a schematic diagram of distribution of areas of interface elements in the photographing scenario stored by the sink end device. The preview window may be displayed in an area 1001, the gallery entry may be displayed in an area 1002, the photographing control may be displayed in an area 1003, and the countdown control may be displayed in an area 1004.

The content parser module may place an interface element into a specified area based on each interface element and tag information corresponding to each interface element that are obtained through parsing. For example, when the sink end device parses out the interface element 306 and that the name in the tag information of the interface element 306 is the preview window, the sink end device may place the interface element 306 in the area 1001. When the sink end device parses out the interface element 315 and that a name in tag information of the interface element 315 is the gallery entry, the sink end device may place the interface element 315 in the area 1002. When the sink end device parses out the interface element 316 and that a name in tag information of the interface element 316 is the photographing control, the sink end device may place the interface element 316 in the area 1003.

It should be understood that, if the sink end device determines that a scenario corresponding to an interface currently displayed on the source end is the photographing scenario, the sink end device may draw the countdown control in the area 1004.

For example, FIG. 11 is a schematic diagram of distribution of areas of interface elements in a chat scenario stored by the sink end device. A name of the song may be displayed in an area 1101, a name of the singer may be displayed in an area 1102, the currently played lyrics may be displayed in an area 1103, the previous song play control may be displayed in an area 1104, the pause/play control may be displayed in an area 1105, and the next song play control may be displayed in an area 1106.

The content parser module may place each interface element into a specified area based on each interface element and tag information corresponding to each interface element that are obtained through parsing. For example, if a name in tag information of the interface element 602 is the song name, the sink end device may place the interface element 601 in the area 1101. If a name in tag information of the interface element 603 is the singer, the sink end device may place the interface element 603 in the area 1102. If a name in tag information of the interface element 605 the currently played lyrics, the sink end device may place the interface element 605 in the area 1103. If a name in tag information of the interface element 612 is the previous song play control, the sink end device may place the interface element 612 in the area 1104. If a name in tag information of the interface element 613 is the pause/play control, the sink end device may place the interface element 613 in the area 1105. If a name in tag information of the interface element 614 is the next song play control, the sink end device may place the interface element 614 in the area 1106.

In an embodiment, the source end device may store information of an interface element required by the sink end device in a specific scenario. In this case, the source end device may send, to the sink end device, the interface element and tag information of the interface element required by the sink end device. Alternatively, the source end device may not store information of interface elements required by the sink end device in a specific scenario. In this case, the source end device may send, to the sink end device, all interface elements and tag information of the interface elements fetched by the source end device, and the sink end device may select, based on a mapping relationship between display areas of the interface elements and the tag information, at least some interface elements for display.

The action translator module 807 is configured to: when the sink end device detects a touch event (for example, a tap event for a control), send the corresponding event and tag information of an interface element corresponding to the event to the remote action receiver module 805 of the source end device.

In an embodiment, after the action translater module 807 of the sink end detects a tap event of the user for a first interface element, the sink end device may send a BLE data packet to the source end device, where the BLE data packet includes type information of the event and tag information of the first interface element. The BLE data packet includes a protocol data unit. The interface element and the tag information of the interface element may be carried in a service data field in the PDU, or may be carried in a manufacturer specific data field in the PDU. For example, a payload of the service data field may include a plurality of bits. The plurality of bits include an extensible bit. The source end device and the sink end device may agree on content of an extensible bit. For example, the sink end device is a smartwatch. When some extensible bits are 00, it indicates that a type of the event is tapping the first interface element. When some extensible bits are 01, it indicates that a type of the event is a finger swipe operation on the first interface element. For another example, the sink end device may encode the tag information corresponding to the first interface element in an encoding manner, for example, GBK, ISO8859-1, or Unicode (for example, UTF-8 or UTF-16), and uses one or more extensible bits to carry encoded data. After parsing the BLE data packet, the source end device may learn the type of the event and the tag information of the corresponding interface element, to learn that the sink end device detects the corresponding event on the first interface element.

After receiving the event sent by the action translater module 807, the remote action receiver module 805 may send the received information to the action dispatcher module 803. The action dispatcher module 803 may find the corresponding interface element based on the tag information of the interface element, and determine, based on the type of the event, a specific operation performed by the user on the interface element on the sink end device. Therefore, the action dispatcher module 603 may update an interface element on a current display interface.

For example, as shown in FIG. 4(a), when the smartwatch detects the operation that the two fingers of the user swipe on the screen in the opposite directions, the smartwatch may send an event type (the two fingers swipe in the opposite directions), the finger swipe distance, and the tag information of the interface element 306 to the mobile phone. In response to receiving the foregoing information, the mobile phone may determine that the user detects, on the smartwatch, the operation that the two fingers of the user swipe on the screen in the opposite directions, so that the mobile phone may adjust the focal length based on the swipe distance. As shown in FIG. 4(b), the mobile phone increases the focal length from 1x to 3x. In response to an update of image information collected in the interface element 306 corresponding to the preview window, the mobile phone may send, to the smartwatch, updated image information displayed in the interface element 306 corresponding to the preview window. The smartwatch may update the image information in the preview window on the photographing interface in response to receiving the image information of the preview window 306 sent by the mobile phone.

For example, as shown in FIG. 5(a), when the smartwatch detects the operation of tapping the countdown control by the user, the smartwatch may send an event type (a tap event) and tag information of the countdown control to the mobile phone. In response to receiving the foregoing information, the mobile phone may determine that the user taps the countdown control on the smartwatch, so that the mobile phone may perform photographing after the countdown ends. As shown in FIG. 5(d), after the countdown ends, the mobile phone may perform photographing to obtain a photo. In this case, content displayed on the interface element 315 corresponding to the gallery entry is updated, and thumbnail information of the photo obtained by the mobile phone through photographing may be displayed on the interface element 315 corresponding to the gallery entry. In addition, the mobile phone may send an updated interface element 315 and tag information of the updated interface element 315 to the smartwatch in response to an update of content displayed on the interface element 315 corresponding to the gallery entry. In response to receiving the updated interface element 315 and the tag information of the updated interface element 315 that are sent by the mobile phone, the smartwatch may update information that is on the photographing interface and that is of the interface element 315 corresponding to the gallery entry (the smartwatch may display the thumbnail information of the photo obtained by the mobile phone through photographing).

It should be understood that, in this embodiment of this application, the mobile phone and the smartwatch may agree on the tag information of the countdown control in advance. In this way, when receiving the event type and the tag information of the countdown control, the mobile phone may learn that the smartwatch expects the mobile phone to perform photographing after the countdown ends.

For example, as shown in FIG. 6(b), when the smartwatch detects an input of the user for the pause/play control, the smartwatch may send an event type (a tap event) and the tag information of the interface element 613 to the mobile phone. In response to receiving the foregoing information, the mobile phone may determine that the user performs a tap operation on the pause/play control on the smartwatch, so that the mobile phone may pause currently played music. The mobile phone updates the interface element 613 from a play state to a paused state. In addition, the mobile phone stops sending audio content corresponding to a song to the smartwatch, and the mobile phone may further send an updated interface element 613 and tag information of the updated interface element 613 to the smartwatch, so that the smartwatch may display the updated interface element 613.

In an embodiment, if one or more interface elements include a second interface element, and a status of the second interface element is updated in real time, after a first electronic device sends the one or more interface elements and tag information of the one or more interface elements to a second electronic device, the first electronic device may send an updated second interface element and tag information of the updated second interface element to the second electronic device in real time after detecting that the status of the second interface element is updated. The interface element 605 shown in FIG. 6(b) is used as an example. The currently played lyrics are updated in real time. For example, the lyrics "ExxxxxxxF" are played at 00:12 to 00:15, and lyrics "GxxxxxxxH" are played at 00:16 to 00:18. In this case, when the song is played to 00:16, the mobile phone may send an updated interface element 605 ("GxxxxxxxH") and tag information of the updated interface element 605 to the smartwatch. In this way, after receiving the updated interface element 605 and the tag information of the updated interface element 605, the smartwatch may update content of the currently played lyrics.

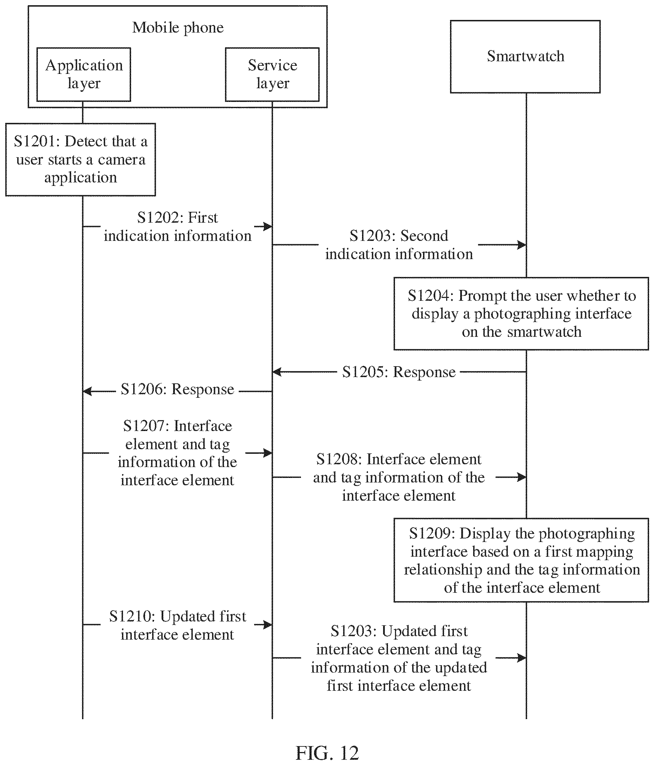

FIG. 12 shows a process of interaction between a mobile phone and a smartwatch in a photographing scenario according to an embodiment of this application. As shown in FIG. 12, the process includes the following steps.

S1201: An application layer of the mobile phone detects that a user starts a camera application.

It should be understood that, for a process in which the application layer of the mobile phone detects that the user starts the camera application, refer to an implementation process in the conventional technology. Details are not described herein.

S1202: The application layer of the mobile phone sends first indication information to a service layer, where the first indication information indicates that the camera application is started.

As shown in FIG. 8, when the application layer of the mobile phone detects that the user starts the camera application, the application layer may send the first indication information to the data transfer module 804 of the service layer.

S1203: The service layer of the mobile phone sends second indication information to the smartwatch, where the second indication information indicates that the camera application on the mobile phone is started.

For example, the data transfer module 804 of the service layer of the mobile phone may send a BLE data packet to the content parser module 806 of the smartwatch, where the BLE data packet may carry the second indication information. For example, a payload of a service data field in the BLE data packet may include an extensible bit. The mobile phone and the smartwatch may agree on content of an extensible bit. For example, when an extensible bit is 1, the smartwatch may learn that the camera application is started on the mobile phone.

S1204: In response to receiving the second indication information, the smartwatch may prompt the user whether to display a photographing interface on the smartwatch.

As shown in FIG. 3(b)-1 and FIG. 3(b)-2, after the smartwatch receives the second indication information, the smartwatch may prompt the user with "It is detected that the mobile phone starts the camera application, do you want to control photographing by using the watch?".

S1205: The smartwatch may send response information to the mobile phone in response to detecting an operation that the user determines to control photographing by using the smartwatch, where the response information indicates that the smartwatch detects the operation that the user determines to control photographing by using the smartwatch.

For example, the smartwatch may send a BLE data packet to the data transfer module 804 of the mobile phone, where the BLE data packet includes the response information. For example, a payload of a service data field in the BLE data packet may include an extensible bit. The mobile phone and the smartwatch may agree on content of an extensible bit. For example, when an extensible bit is 1, the mobile phone may learn that the smartwatch detects the operation that the user determines to control photographing by using the smartwatch.

In an embodiment, in addition to indicating that the smartwatch detects the operation that the user determines to control photographing by using the smartwatch, the response information in S1205 may also indicate the mobile phone to send one or more interface elements on the photographing interface to the smartwatch.

S1206: In response to receiving the response information, the service layer of the mobile phone indicates, to the application layer, that the response information is received.

S1207: The application layer of the mobile phone sends one or more interface elements on the photographing interface and tag information of the one or more interface elements to the service layer in response to receiving the response information.

S1208: The service layer of the mobile phone sends the one or more interface elements on the photographing interface and the tag information of the one or more interface elements to the smartwatch.

It should be understood that, for an implementation process in which the mobile phone sends the one or more interface elements on the photographing interface and the tag information of the one or more interface elements to the smartwatch, refer to the descriptions in the foregoing embodiment. Details are not described herein again.

S1209: In response to receiving the one or more interface elements and the tag information of the one or more interface elements that are sent by the mobile phone, the smartwatch displays a photographing interface based on a first mapping relationship and the tag information of the one or more interface elements, where the first mapping relationship may be a correspondence between display areas of the one or more interface elements and the tag information of the one or more interface elements.

It should be understood that the first mapping relationship may be a correspondence between the display areas of the interface elements shown in FIG. 10 or FIG. 11 and the tag information of the interface elements. For specific descriptions, refer to the descriptions in the foregoing embodiment. Details are not described herein again.

S1210: When the application layer of the mobile phone detects that content displayed on a first interface element is updated, the application layer of the mobile phone sends an updated first interface element to the service layer of the mobile phone.

It should be understood that the first interface element may be an interface element in the one or more interface elements sent by the mobile phone to the smartwatch, and the first interface element is an interface element displayed by the smartwatch.

S1211: The service layer of the mobile phone sends the updated first interface element and tag information of the first interface element to the smartwatch.

For example, as shown in FIG. 3(c), after the mobile phone sends the one or more interface elements and the tag information of the one or more interface elements to the smartwatch, if the mobile phone detects that the image information displayed in the preview window changes, the mobile phone may send an updated interface element 306 and tag information of the interface element 306 to the smartwatch. In response to receiving the updated interface element 306 and the tag information of the updated interface element 306, the smartwatch may update the interface element 306 on the photographing interface displayed by the smartwatch. Therefore, the image information in the preview window displayed on the mobile phone and the image information in the preview window displayed on the smartwatch are synchronized.

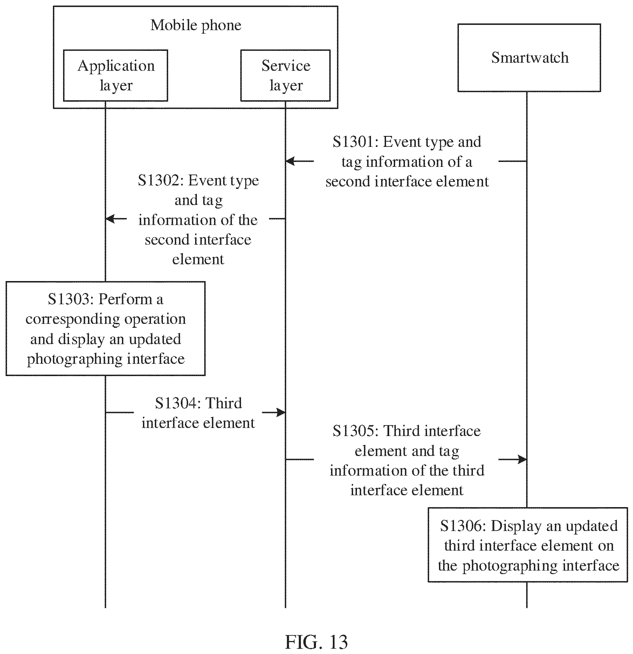

FIG. 13 shows a process of interaction between a mobile phone and a smartwatch in a photographing scenario according to an embodiment of this application. As shown in FIG. 13, the process includes the following steps.

S1301: In response to detecting an input of a user for a second interface element on the smartwatch, the smartwatch sends, to a service layer of the mobile phone, an event type corresponding to the input and tag information of the second interface element.

It should be understood that the second interface element may be an interface element in one or more interface elements sent by the mobile phone to the smartwatch, and the second interface element is an interface element displayed by the smartwatch (for example, the second interface element may be a photographing control or a gallery entry), or the second interface element may be an interface element displayed by the smartwatch and is not an interface element in the one or more interface elements (for example, the second interface element may be a countdown control).

S1302: The service layer of the mobile phone sends the event type and the tag information of the second interface element to an application layer of the mobile phone.

It should be understood that, for an implementation process in which the smartwatch sends the event type corresponding to the input and the tag information of the second interface element to the mobile phone, refer to the descriptions in the foregoing embodiment. Details are not described herein again.

S1303: In response to receiving the event type and the tag information of the second interface element, the application layer of the mobile phone may perform a corresponding operation and display an updated photographing interface.

S1304: If a third interface element on the updated photographing interface is updated, the application layer of the mobile phone sends an updated third interface element to the service layer of the mobile phone.

It should be understood that the third interface element may be an interface element in the one or more interface elements sent by the mobile phone to the smartwatch, and the third interface element is an interface element displayed by the smartwatch.

S1305: The service layer of the mobile phone may send, to the smartwatch, the updated third interface element and tag information corresponding to the updated third interface element.

As shown in FIG. 3(d), in response to receiving the event type (a tap event) and the tag information of the photographing control 316 that are sent by the smartwatch, the mobile phone may determine that the user taps the photographing control 316 on the smartwatch. Therefore, the mobile phone may perform a photographing operation. The mobile phone may update information about the gallery entry 315 in response to performing the photographing operation. For example, the gallery entry 315 is updated from thumbnail information that is shown in FIG. 3(c) and that does not include a photo to thumbnail information that is shown in FIG. 3(d) and that is of a photo that is just taken. In response to an update of the gallery entry 315, the mobile phone may send, to the smartwatch, the thumbnail information displayed at the updated gallery entry 315 and tag information of the updated gallery entry 315.

S1306: The smartwatch may display the updated third interface element in response to receiving the updated third interface element and the tag information of the updated third interface element.

As shown in FIG. 3(d), the smartwatch may display the updated gallery entry 315 in response to receiving the information of the gallery entry 315 and the tag information of the gallery entry 315.

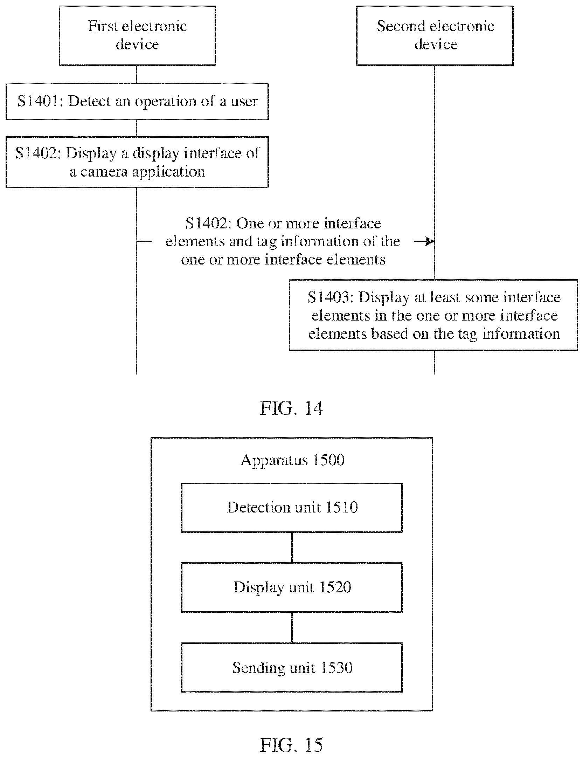

FIG. 14 is a schematic flowchart of a display method 1400 according to an embodiment of this application. The method 1400 may be performed by a first electronic device and a second electronic device. The first electronic device may be the foregoing source end device, and the second electronic device may be the foregoing sink end device. The method 1400 includes the following steps.

S1401: The first electronic device detects an operation of a user.

In an embodiment, the operation of the user may be an operation of tapping an icon of a camera application by the user.

In an embodiment, the operation of the user may be an operation of swiping in a preset direction on a lock screen by the user.

It should be understood that, in this embodiment of this application, how the first electronic device starts the camera application is not specifically limited, and the user may alternatively start the camera application in a preset operation manner (for example, press a power button twice).

S1402: In response to detecting the operation of the user, the first electronic device displays a first interface, and sends one or more interface elements and tag information of the one or more interface elements to the second electronic device, where the first interface includes the one or more interface elements.

For example, as shown in FIG. 3(c), the first electronic device may be the mobile phone, the first interface may be the display interface of the camera application, and the music play interface includes the interface element 301 to the interface element 317.

It should be understood that, for a process in which the first electronic device sends the one or more interface elements and the tag information of the one or more interface elements to the second electronic device, refer to the descriptions in the foregoing embodiment. Details are not described herein again.

In an embodiment, when a distance between the first electronic device and the second electronic device is less than or equal to a preset distance, the first electronic device may prompt the user to send the one or more interface elements on the first interface to the second electronic device for display. The first electronic device may send the one or more interface elements and the tag information of the one or more interface elements to the second electronic device in response to an operation that the user determines to send the interface element on the first interface to the second electronic device.

In an embodiment, when the first electronic device determines that a device networked with the first electronic device includes an electronic device supporting displaying of one or more interface elements, the first electronic device may send the one or more interface elements and the tag information of the one or more interface elements to the second electronic device. For example, after displaying the first interface, the first electronic device may send a query request to the device networked with the first electronic device, where the query request is used to query whether the device that receives the query request supports displaying of an interface element on the display interface of the camera application. If the device networked with the first electronic device includes the second electronic device, and the second electronic device supports displaying of the interface element on the display interface of the camera application, the second electronic device may send an acknowledgement (ACK) to the first electronic device, so that the first electronic device learns that the second electronic device supports displaying of the interface element on the display interface of the camera application.

For example, the first electronic device may send a BLE data packet to the second electronic device, where the BLE data packet may carry the query request. The BLE data packet includes a PDU. The query request may be carried in a service data field in the PDU, or may be carried in a manufacturer specific data field in the PDU. For example, a payload of the service data field may include a plurality of bits. The plurality of bits include an extensible bit. The first electronic device and the second electronic device may agree on content of an extensible bit. For example, when an extensible bit is 1, the second electronic device may learn that the first electronic device requests to query whether the second electronic device supports displaying of the interface element on the display interface of the camera application.

If the second electronic device supports displaying of the interface element on the display interface of the camera application, the second electronic device may send the BLE data packet to the first electronic device. For example, when an extensible bit in the BLE data packet is 1, the first electronic device may learn that the second electronic device supports displaying of the interface element on the display interface of the camera application.

In an embodiment, if a plurality of devices networked with the first electronic device all support displaying of the interface element on the display interface of the camera application, the first electronic device may further prompt the user to send the interface element on the display interface of the camera application to a device for displaying. For example, if both the second electronic device and a third electronic device in the devices that are networked with the first electronic device support displaying of one or more interface elements, the first electronic device may prompt the user to send the one or more interface elements to the second electronic device or the third electronic device for displaying. The first electronic device may send the one or more interface elements and the tag information of the one or more interface elements to the second electronic device in response to an operation of selecting the second electronic device by the user.

In an embodiment, the first indication may alternatively be request information from the second electronic device. For example, a display interface of the second electronic device may include an icon of the camera application. After the second electronic device detects an operation of tapping the icon of the camera application by the user, the second electronic device may send request information to the first electronic device, where the request information is used to request information about the one or more interface elements on the display interface of the camera application.

It should be understood that, that the display interface of the second electronic device includes the icon of the camera application does not mean that the camera application is installed on the second electronic device. The second electronic device detects that the user taps the icon to trigger the second electronic device to send request information to the first electronic device, where the request information is used to request the first electronic device to send icons of the one or more applications on the display interface of the camera application to the second electronic device.

For example, the second electronic device may send a BLE data packet to the first electronic device in response to detecting the operation of tapping the icon of the camera application by the user. For example, when an extensible bit in the BLE data packet is 1, the first electronic device may learn that the second electronic device requests the first electronic device for the information of the one or more interface elements on the display interface of the camera application.

In an embodiment, after the first electronic device and the second electronic device are networked, the second electronic device may send a query request to the first electronic device, where the query request is used to request to query whether the camera application is installed on the first electronic device. For example, the second electronic device may send a BLE data packet to the first electronic device, where the BLE data packet may carry the query request. A payload of a service data field in the BLE data packet may include a plurality of bits, where the plurality of bits include an extensible bit. The first electronic device and the second electronic device may agree on content of an extensible bit. For example, when an extensible bit is 1, the first electronic device may learn that the second electronic device requests to query whether the camera application is installed on the first electronic device. If the camera application is installed on the first electronic device, the first electronic device may send an acknowledgement (ACK) to the second electronic device, so that the second electronic device may learn that the camera application is installed on the first electronic device. Then, if the second electronic device detects the operation of tapping the icon of the camera application by the user, the second electronic device may send the request information to the first electronic device.

S1403: The second electronic device may display a second interface based on the tag information of the one or more interface elements, where at least some interface elements in the one or more interface elements are displayed on the second interface.

In an embodiment, after receiving the one or more interface elements and the tag information of the one or more interface elements, the second electronic device may display the second interface based on the tag information of the one or more interface elements. For example, the second electronic device may select, based on the tag information, an interface element corresponding to tag information with a high priority level for display. The GUIs shown in FIG. 3(c) are used as examples. The mobile phone may send the interface elements 301 to 317 and the tag information of the interface elements 301 to 317 to the smartwatch. The smartwatch may store priority information (for example, a sequence of priorities is the viewfinder frame, the gallery entry, and the photographing control in descending order) of the tag information. In this case, the smartwatch may sequentially display the interface elements 306, 315, and 316 based on the priority information and the tag information of the interface elements 301 to 317.

In an embodiment, in addition to the display interface elements 306, 315, and 316, the smartwatch may further display the countdown control 320. The display interface of the camera application of the mobile phone may not include the countdown control 320.

In an embodiment, the second electronic device displays at least some interface elements in the one or more interface elements based on a first mapping relationship and the tag information of the one or more interface elements, where the first mapping relationship is a mapping relationship between display areas of the one or more interface elements and the tag information of the one or more interface elements.

In an embodiment, the first mapping relationship may be stored in the first electronic device. When sending the interface element and the tag information to the second electronic device, the first electronic device may also send the first mapping relationship to the second electronic device.

In an embodiment, for a same scenario (for example, the photographing scenario), the first electronic device may store different mapping relationships for different devices. For example, the first electronic device is a mobile phone. The mobile phone may store a first mapping relationship and a second mapping relationship, where the first mapping relationship is a mapping relationship between a display area of an interface element and tag information of the interface element in a notebook computer, and the second mapping relationship is a mapping relationship between a display area of an interface element and tag information of the interface element in a smartwatch. For different sink end devices, the mobile phone may send different interface elements and tag information of the interface elements. For example, for the notebook computer, the mobile phone may send, to the notebook computer, the interface elements 306, 308 to 314, 315, and 316, and tag information corresponding to the interface elements. For another example, for the smartwatch, the mobile phone may send, to the smartwatch, the interface elements 306, 315, and 316, and tag information corresponding to the interface elements.

In an embodiment, the first mapping relationship may alternatively be stored in the second electronic device. When receiving the interface element and the tag information from the first electronic device, the second electronic device may display the second interface based on the tag information of the interface element and the first mapping relationship.

In an embodiment, the second electronic device may store a mapping relationship between a display area of an interface element and tag information of the interface element in different scenarios. For example, as shown in FIG. 10 and FIG. 11, the sink end device may store mapping relationships between different areas and tag information of different interface elements in the photographing scenario and the music scenario. After the second electronic device receives the one or more interface elements and the tag information of the one or more interface elements from the first electronic device, the sink end device may select, based on the tag information of the one or more interface elements, at least some of the one or more interface elements for display.

In an embodiment, the first electronic device may send, to the second electronic device, all tagged interface elements on the first interface and tag information of the interface elements. After receiving all the tagged interface elements and the tag information of the interface elements, the second electronic device may select, based on the first mapping relationship, some or all of the interface elements for display.

For example, as shown in FIG. 3(c), the mobile phone may send, to the smartwatch, the tagged interface elements 301 to 317 and tag information corresponding to the interface elements 301 to 317. After receiving the interface elements and the tag information of the interface elements, the smartwatch may select, based on a correspondence between the display areas of the interface elements and the tag information shown in FIG. 10, the interface elements 306, 315, and 316 from the interface elements 301 to 317 for display.

In an embodiment, the first electronic device may store information of an interface element required in a scenario. In this way, the first electronic device may send, to the second electronic device, an interface element that needs to be displayed by the second electronic device and tag information of the interface element. For example, after the first electronic device and the second electronic device are networked, the second electronic device may send, to the first electronic device, information about an interface element required in a first scenario. The second electronic device may send a BLE data packet to the first electronic device, where the BLE data packet may include information about the first scenario and the information of the interface element required in the first scenario. A payload of a service data field in the BLE data packet may include a plurality of bits, where the plurality of bits include an extensible bit. The first electronic device and the second electronic device may agree on content of an extensible bit. For example, the second electronic device may encode the information about the first scenario (for example, music) in an encoding manner, for example, GBK, ISO8859-1, or Unicode (for example, UTF-8 or UTF-16), and may encode the tag information of the interface element required in the first scenario in an encoding manner, for example, GBK, ISO8859-1, or Unicode (for example, UTF-8 or UTF-16), to use one or more extensible bits to carry encoded data. After receiving the BLE data packet, the first electronic device may decode the BLE data packet, to learn the tag information of the interface element required by the second electronic device in the first scenario. In this way, after receiving the first indication, the first electronic device may send, to the second electronic device, the interface element and the tag information of the interface element that are required by the second electronic device.

FIG. 15 is a schematic block diagram of an apparatus 1500 according to an embodiment of this application. The apparatus 1500 may be disposed in the first electronic device in FIG. 14. The apparatus 1500 includes: a detection unit 1510, configured to detect an operation of a user; a display unit 1520, configured to display a first interface by the first electronic device in response to the operation, where the first interface is a display interface of a camera application; and a sending unit 1530, configured to send first information to the second electronic device, where the first information includes one or more interface elements on the first interface and tag information of the one or more interface elements.

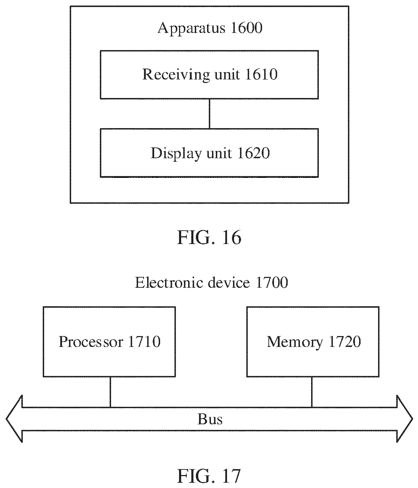

FIG. 16 is a schematic block diagram of an apparatus 1600 according to an embodiment of this application. The apparatus 1600 may be disposed in the second electronic device in FIG. 14. The apparatus 1600 includes: a receiving unit 1610, configured to receive first information sent by the first electronic device, where the first information includes one or more interface elements on a first interface and tag information of the one or more interface elements, and the first interface is a display interface of a camera application; and a display unit 1620, configured to: in response to receiving the first information, display a second interface based on the tag information of the one or more interface elements, where the second interface displays at least some interface elements in the one or more interface elements.

FIG. 17 is a schematic diagram of a structure of an electronic device 1700 according to an embodiment of this application. As shown in FIG. 17, the electronic device includes one or more processors 1710 and one or more memories 1720. The one or more memories 1720 store one or more computer programs, and the one or more computer programs include instructions. When the instructions are run by the one or more processors 1710, the first electronic device or the second electronic device is enabled to perform the technical solutions in the foregoing embodiments.

An embodiment of this application provides a system, including a first electronic device and a second electronic device. The system is configured to perform the technical solutions in the foregoing embodiments. Implementation principles and technical effects thereof are similar to those of the foregoing method embodiments. Details are not described herein again.

An embodiment of this application provides a computer program product. When the computer program product runs on a first electronic device (or the notebook computer in the foregoing embodiments), the first electronic device is enabled to perform the technical solutions in the foregoing embodiments. Implementation principles and technical effects thereof are similar to those of the foregoing method embodiments. Details are not described herein again.

An embodiment of this application provides a computer program product. When the computer program product runs on a second electronic device (or the mobile phone in the foregoing embodiments), the second electronic device is enabled to perform the technical solutions in the foregoing embodiments. Implementation principles and technical effects thereof are similar to those of the foregoing method embodiments. Details are not described herein again.

An embodiment of this application provides a readable-storage medium. The readable-storage medium includes instructions. When the instructions are run on a first electronic device (or the notebook computer in the foregoing embodiments), the first electronic device is enabled to perform the technical solutions in the foregoing embodiments. Implementation principles and technical effects thereof are similar, and details are not described herein again.

An embodiment of this application provides a readable-storage medium. The readable-storage medium includes instructions. When the instructions are run on a second electronic device (or the mobile phone in the foregoing embodiments), the second electronic device is enabled to perform the technical solutions in the foregoing embodiments. Implementation principles and technical effects thereof are similar, and details are not described herein again.

An embodiment of this application provides a chip. The chip is configured to execute instructions. When the chip runs, the technical solutions in the foregoing embodiments are executed. Implementation principles and technical effects thereof are similar, and details are not described herein again.

A person of ordinary skill in the art may be aware that, units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A system, wherein the system comprises a first electronic device and a second electronic device, and the first electronic device communicates with the second electronic device through a short-range wireless connection;
the first electronic device is configured to: in response to detecting an operation of a user, display a first interface, and send first information to the second electronic device, wherein the first interface is a display interface of a camera application, and the first information comprises one or more interface elements on the first interface and tag information of the one or more interface elements; and
the second electronic device is configured to: in response to receiving the first information, display a second interface based on the tag information of the one or more interface elements, wherein at least some interface elements in the one or more interface elements are displayed on the second interface.

2. The system according to claim 1, wherein the second electronic device is specifically configured to display the second interface based on the tag information of the one or more interface elements and a first mapping relationship, wherein the first mapping relationship is a mapping relationship between display areas of the at least some interface elements and tag information of the at least some interface elements.

3. The system according to claim 1 or 2, wherein the first electronic device is further configured to send first indication information to the second electronic device in response to detecting the operation of the user, wherein the first indication information indicates that the first electronic device starts the camera application;
the second electronic device is further configured to: in response to receiving the first indication information, prompt the user whether to control photographing by using the second electronic device;
the second electronic device is further configured to send request information to the first electronic device in response to detecting an operation that the user determines to control photographing by using the second electronic device, wherein the request information is used to request information about the interface element on the first interface; and
the first electronic device is specifically configured to send the first information to the second electronic device in response to receiving the request information.

4. The system according to any one of claims 1 to 3, wherein the at least some interface elements comprise a viewfinder frame;
the first electronic device is further configured to: detect that image information in the viewfinder frame is updated, and send updated image information to the second electronic device; and
the second electronic device is further configured to display the updated image information in the viewfinder frame on the second interface in response to receiving the updated image information.

5. The system according to any one of claims 1 to 4, wherein the at least some interface elements comprise a photographing control;
the second electronic device is further configured to send second indication information to the first electronic device in response to detecting an input of the user for the photographing control, wherein the second indication information indicates that the second electronic device detects the input of the user for the photographing control; and
the first electronic device is further configured to: in response to receiving the second indication information, perform a photographing operation, and obtain first image information.

6. The system according to claim 5, wherein the at least some interface elements further comprise a gallery entry;
the first electronic device is further configured to: before performing the photographing operation, and obtaining the first image information, display thumbnail information of second image information through the gallery entry;
the first electronic device is further configured to: in response to obtaining the first image information, update the thumbnail information of the second image information in the gallery entry to thumbnail information of the first image information, and send second information to the second electronic device, wherein the second information comprises the thumbnail information of the first image information; and
the second electronic device is further configured to: in response to receiving the second information, update the thumbnail information of the second image information in the gallery entry displayed on the second interface to the thumbnail information of the first image information.

7. The system according to any one of claims 1 to 6, wherein the second electronic device is further configured to display a countdown control on the second interface;
the second electronic device is further configured to send third indication information to the first electronic device in response to detecting an input of the user for the countdown control, wherein the third indication information indicates that the second electronic device detects the input of the user for the countdown control; and
the first electronic device is further configured to: in response to receiving the third indication information, perform the photographing operation when a countdown ends.

8. The system according to any one of claims 1 to 7, wherein the first electronic device is further configured to: before sending the first information to the second electronic device, determine that a distance between the first electronic device and the second electronic device is less than or equal to a preset distance.

9. The system according to any one of claims 1 to 8, wherein the first electronic device is a mobile phone, and the second electronic device is a smartwatch.

10. A display method, wherein the method is applied to a first electronic device, the first electronic device communicates with a second electronic device through a short-range wireless connection, and the method comprises:
detecting, by the first electronic device, an operation of a user; and
displaying, by the first electronic device in response to the operation, a first interface, and sending first information to the second electronic device, wherein the first interface is a display interface of a camera application, and the first information comprises one or more interface elements on the first interface and tag information of the one or more interface elements.

11. The method according to claim 10, wherein the method further comprises:
sending, by the first electronic device, information about a first mapping relationship to the second electronic device, wherein the first mapping relationship is a mapping relationship between a display area of an interface element and tag information of the interface element.

12. The method according to claim 10 or 11, wherein the displaying, by the first electronic device in response to the operation, a first interface, and sending first information to the second electronic device comprises:
displaying, by the first electronic device in response to detecting the operation of the user, the first interface, and sending first indication information to the second electronic device, wherein the first indication information indicates that the first electronic device starts the camera application;
receiving, by the first electronic device, request information sent by the second electronic device, wherein the request information is used to request information about the interface element on the first interface; and
sending, by the first electronic device, the first information to the second electronic device in response to receiving the request information.

13. The method according to any one of claims 10 to 12, wherein the one or more interface elements comprise a viewfinder frame, a second interface comprises the viewfinder frame, and the method further comprises:
sending, by the first electronic device, updated image information to the second electronic device in response to detecting that image information in the viewfinder frame is updated.

14. The method according to any one of claims 10 to 13, wherein the one or more interface elements comprise a photographing control, the second interface comprises the photographing control, and the method further comprises:
receiving, by the first electronic device, second indication information sent by the second electronic device, wherein the second indication information indicates that the second electronic device detects an input of the user for the photographing control; and
performing, by the first electronic device in response to receiving the second indication information, a photographing operation, and obtaining first image information.

15. The method according to claim 14, wherein the one or more interface elements further comprise a gallery entry, the second interface comprises the gallery entry, and the method further comprises:
before performing the photographing operation, and obtaining the first image information, displaying, by the first electronic device, thumbnail information of second image information through the gallery entry; and
updating, by the first electronic device in response to obtaining the first image information, the thumbnail information of the second image information in the gallery entry to thumbnail information of the first image information, and sending second information to the second electronic device, wherein the second information comprises the thumbnail information of the first image information.

16. The method according to any one of claims 10 to 15, wherein the method further comprises:
before sending the first information to the second electronic device, determining, by the first electronic device, that a distance between the first electronic device and the second electronic device is less than or equal to a preset distance.

17. A display method, wherein the method is applied to a second electronic device, the second electronic device communicates with a first electronic device through a short-range wireless connection, and the method comprises:
receiving, by the second electronic device, first information sent by the first electronic device, wherein the first information comprises one or more interface elements on a first interface and tag information of the one or more interface elements, and the first interface is a display interface of a camera application; and
in response to receiving the first information, displaying, by the second electronic device, a second interface based on the tag information of the one or more interface elements, wherein at least some interface elements in the one or more interface elements are displayed on the second interface.

18. The method according to claim 17, wherein the displaying, by the second electronic device, a second interface based on the tag information of the one or more interface elements comprises:
displaying, by the second electronic device, the second interface based on the tag information of the one or more interface elements and a first mapping relationship, wherein the first mapping relationship is a mapping relationship between display areas of the at least some interface elements and tag information of the at least some interface elements.

19. The method according to claim 17 or 18, wherein before the receiving, by the second electronic device, first information sent by the first electronic device, the method further comprises:
receiving, by the second electronic device, first indication information sent by the first electronic device, wherein the first indication information indicates that the first electronic device starts the camera application;
in response to receiving the first indication information, prompting, by the second electronic device, a user whether to control photographing by using the second electronic device; and
sending, by the second electronic device, request information to the first electronic device in response to detecting an operation that the user determines to control photographing by using the second electronic device, wherein the request information is used to request information about the interface element on the first interface.

20. The method according to any one of claims 17 to 19, wherein the at least some interface elements comprise a viewfinder frame, and the method further comprises:
when image information in the viewfinder frame on the first interface is updated, receiving, by the second electronic device, updated image information sent by the first electronic device; and
displaying, by the second electronic device, the updated image information in the viewfinder frame on the second interface in response to receiving the updated image information.

21. The method according to any one of claims 17 to 20, wherein the at least some interface elements comprise a photographing control, and the method further comprises:
sending, by the second electronic device, second indication information to the first electronic device in response to detecting an input of the user for the photographing control, wherein the second indication information indicates that the second electronic device detects the input of the user for the photographing control.

22. The method according to claim 21, wherein the at least some interface elements further comprise a gallery entry, and the method further comprises:
before sending the second indication information to the first electronic device, displaying, by the second electronic device, thumbnail information of first image information in the gallery entry displayed on the second interface;
after sending the second indication information to the first electronic device, receiving, by the second electronic device, second information sent by the first electronic device, wherein the second information comprises thumbnail information of second image information; and
in response to receiving the second information, updating the thumbnail information of the first image information in the gallery entry displayed on the second interface to the thumbnail information of the second image information.

23. The method according to any one of claims 17 to 22, wherein the method further comprises:
displaying, by the second electronic device, a countdown control on the second interface; and
sending, by the second electronic device, third indication information to the first electronic device in response to detecting an input of the user for the countdown control, wherein the third indication information indicates that the second electronic device detects the input of the user for the countdown control.

24. The method according to claim 23, wherein the first interface does not comprise the countdown control.

25. An electronic device, wherein the electronic device comprises:
one or more processors; and
one or more memories, wherein
the one or more memories store one or more computer programs, the one or more computer programs comprise instructions, and when the instructions are executed by the one or more processors, the electronic device is enabled to perform the method according to any one of claims 10 to 16.

26. An electronic device, wherein the electronic device comprises:
one or more processors; and
one or more memories, wherein
the one or more memories store one or more computer programs, the one or more computer programs comprise instructions, and when the instructions are executed by the one or more processors, the electronic device is enabled to perform the method according to any one of claims 17 to 24.

27. A computer-readable storage medium, comprising computer instructions, wherein when the computer instructions are run on an electronic device, the electronic device is enabled to perform the method according to any one of claims 10 to 16; or
when the computer instructions are run on an electronic device, the electronic device is enabled to perform the method according to any one of claims 17 to 24.
